# EUROPÄISCHE PATENTSCHRIFT

(11) **EP 2 480 598 B1**
(45) Veröffentlichungstag und Bekanntmachung des Hinweises auf die Patenterteilung: **03.09.2014**
(21) Anmeldenummer: 10771308.3
(22) Anmeldetag: 22.09.2010
(51) Int. Cl.: C08J 9/00, C08K 3/00, C08K 5/00

(54) **FLAMMGESCHÜTZTE EXPANDIERBARE STYROL-POLYMERISATE**
FLAME-RETARDANT EXPANDABLE STYRENE POLYMERS
POLYMÈRES DE STYRÈNE EXPANSÉS À L'ÉPREUVE DU FEU

(30) Priorität: 24.09.2009 AT 15052009; 24.09.2009 AT 15062009
(43) Veröffentlichungstag der Anmeldung: 01.08.2012
(73) Patentinhaber: Sunpor Kunststoff GmbH, 3100 St. Pölten (AT)
(72) Erfinder: EBERSTALLER, Roman, A-3200 Ober-Grafendorf (AT); HINTERMEIER, Gerhard, A-3100 St. Pölten (AT)
(74) Vertreter: Wildhack & Jellinek
(86) Internationale Anmeldenummer: PCT/AT2010/000346
(87) Internationale Veröffentlichungsnummer: WO 2011/035357

(56) Entgegenhaltungen:
- WO-A1-2006/027241
- WO-A2-2009/035881
- DE-A1- 10 256 816
- FR-A- 1 528 215
- US-A- 4 324 865
- DATABASE WPI Week 200474 Thomson Scientific, London, GB; AN 2004-750750 XP002615762, & JP 2004 277552 A (TORAY IND INC) 7. Oktober 2004 (2004-10-07)

## Beschreibung

Die vorliegende Erfindung betrifft in einem ersten Aspekt flammgeschützte, zumindest ein Treibmittel enthaltende, expandierbare Styrol-Polymerisate *(EPS),* in denen als Flammschutzmittelsystem eine Kombination aus zumindest einer Phosphorverbindung als Flammschutzmittel und zumindest einer Schwefelverbindung als zusätzliches Flammschutzmittel bzw. -synergist enthalten ist.

Die Erfindung betrifft weiters Verfahren zur Herstellung dieser Styrol-Polymerisate, weiters mit diesen Flammschutzmittelsystemen geschützte Styrol-Polymerschaumstoffe und Verfahren zu deren Herstellung, sowie die besondere Verwendung obenstehender Flammschutzmittelsysteme in expandierbaren Styrol-Polymerisaten sowie *Styrol-*Polymerschaumstoffen.

Die Erfindung betrifft in einem zweiten besonders vorteilhaften Aspekt flammgeschützte, zumindest ein Treibmittel enthaltende, expandierbare *Styrol*-Polymerisate *(EPS),* in denen als Flammschutzmittel zumindest eine Phosphorverbindung der folgenden allgemeinen Formel (I) oder Hydrolysate oder Salze davon enthalten ist: 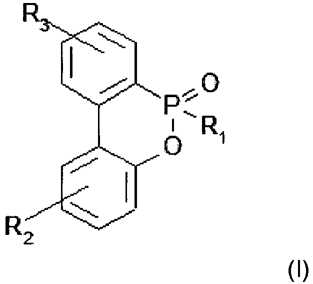 worin die Reste R jeweils unabhängig voneinander: -H, substituiertes oder nicht substituiertes C₁-C₁₅-Alkyl, C₁-C₁₅-Alkenyl, C₃-C₈-Cycloalkyl, C₆-C₁₈-Aryl, C₇-C₃₀-Alkylaryl, C₁-C₈-Alkoxy oder C₁-C₈-Alkylthio, oder -OH oder -SH sowie Alkalimetall-, Erdalkalimetall-, Ammonium- oder Phosphonium-Salze davon, bedeuten.

Die Erfindung gemäß dem zweiten Aspekt betrifft weiters Verfahren zur Herstellung dieser *Styrol*-Polymerisate, weiters mit diesen Flammschutzmitteln geschützte *Styrol-*Polymerschaumstoffe und Verfahren zu deren Herstellung, sowie die besondere Verwendung obenstehender Flammschutzmittel in expandierbaren *Styrol*-Polymerisaten sowie *Styrol*-Polymerschaumstoffen.

### erster Aspekt der Erfindung (Ansprüche 1 bis 12):

Die Ausrüstung von Polymerschaumstoffen mit Flammschutzmitteln ist für viele Bereiche von Bedeutung bzw. vorgeschrieben. Die Reglementierungen über die Verwendung von Polystyrol-Partikelschaumstoffen aus expandierbarem Polystyrol (EPS) oder von Polystyrol-Extrusionsschaumstoffplatten (XPS) als Isoliermaterial für Gebäude verlangen in den meisten Fällen eine Flammschutzausrüstung. Polystyrol-Homo- und Copolymere werden überwiegend mit halogenhaltigen, insbesondere bromierten organischen Verbindungen wie Hexabromcyclododecan (HBCD) schwer entflammbar gemacht. Diese und eine Reihe anderer bromierter Substanzen sind jedoch auf Grund ihrer potentiellen Umwelt- und Gesundheitsgefährdung in Diskussion geraten bzw. bereits verboten.

Als Alternative existieren zahlreiche halogenfreie Flammschutzmittel. Halogenfreie Flammschutzmittel müssen jedoch zur Erreichung der gleichen Flammschutzwirkung der halogenhaltigen Flammschutzmittel in der Regel in deutlich höheren Mengen eingesetzt werden.

Unter anderem aus diesem Grund können halogenfreie Flammschutzmittel, die in kompakten thermoplastischen Polymeren einsetzbar sind, häufig nicht in gleicher Weise in Polymerschaumstoffen eingesetzt werden, da sie entweder den Schäumprozess stören oder die mechanischen und thermischen Eigenschaften des Polymerschaumstoffes beeinflussen. Bei der Herstellung von expandierbarem Polystyrol durch Suspensionspolymerisation können die hohen Flammschutzmittelmengen außerdem die Stabilität der Suspension verringern und somit das Herstellungsverfahren stören bzw. beeinträchtigen.

Die Wirkung der bei kompakten Polymeren eingesetzten Flammschutzmittel in Polymerschaumstoffen ist häufig aufgrund der Besonderheiten von derartigen Schaumstoffen und des unterschiedlichen Brandverhaltens bzw. wegen unterschiedlicher Brandtests nicht vorhersagbar.

Aus dem Stand der Technik ist der Einsatz von phosphorhaltigen Substanzen in expandierbaren Polymerisaten grundsätzlich bekannt:
Die EP-A 834 529 beschreibt expandierbare Styrolpolymerisate, die als halogenfreies Flammschutzmittel eine Mischung aus einer Phosphorverbindung und einem wasserabspaltenden Metallhydroxid enthalten. Bevorzugt werden 5 bis 10 Gew.-% Mg(OH) und 5 bis 10 Gew.-% Triphenylphoshat (TPP) in einem Extruder in geschmolzenes Polystyrol eingearbeitet und granuliert und das Granulat in wässriger Suspension mit Treibmittel nach imprägniert.
Die WO 00/34342 beschreibt ein Verfahren zur Herstellung von expandierbarem Polystyrol durch Suspensionspolymerisation von Styrol in Gegenwart von 5 bis 50 Gew.-% Blähgraphit und gegebenenfalls 2 bis 20 Gew.% einer Phosphorverbindung als Flammschutzmittel.

Außerdem ist z.B. in der WO 2006/027241 ein halogenfreies Flammschutzmittel für Polymerschaumstoffe beschrieben, nämlich die Phosphorverbindung 9,10-Dihydro-9-oxa-10-phospha-phenantren-10-oxid (6H-Dibenz[c,e]-oxaphosphorin-6-oxid, DOP-O, CAS [35948-25-5]).

Dieses Flammschutzmittel ist bereits einigermaßen gut einsetzbar, es besteht jedoch der Bedarf, derartige Polymerisate bzw. Polymerschaumstoffe noch brandbeständiger zu machen und dies bei möglichst geringem Gehalt an Flammschutzmitteln bzw. ohne den Gehalt an Flammschutzmitteln zu erhöhen.

Aufgabe des ersten Aspektes der vorliegenden Erfindung ist es somit, ein gut brandbeständiges flammgeschütztes expandierbares *Styrol*-Polymerisat *(EPS)* mit geringem Gehalt an Flammschutzmitteln und guter Qualität zu schaffen.

Dabei ist es insbesondere wünschenswert, dass das Polymer auch die strengen Anforderungen an die Brandbeständigkeit für z.B. Bauanwendungen erfüllen kann, wie beispielsweise den B2-Kleinbrennertest nach DIN 4102-2 oder den Brandtest nach EN 11925-2.

Weiters ist es Aufgabe des ersten Aspektes der der Erfindung, ein vorteilhaftes Verfahren zur Herstellung derartiger *Styrol*-Polymerisate zu schaffen.

Eine weitere Aufgabe des ersten Aspektes der der Erfindung besteht darin, einen halogenfrei flammgeschützten, jedoch qualitativ entsprechenden, *Styrol-*Polymerschaumstoff mit vorteilhaftem Brandverhalten sowie guten mechanischen Eigenschaften sowie ein vorteilhaftes Herstellungsverfahren dafür zu schaffen.

Diese Aufgaben werden durch die unabhängigen Ansprüche *1*, *5, 8 und 12* des ersten Aspektes der Erfindung gelöst.

Die Aufgabe wird bei einem *Styrol*-Polymerisat bzw. einem *Styrol-*Polymerschaumstoff der eingangs erwähnten Art dadurch gelöst, dass im Flammschutzmittelsystem die als Flammschutzmittel wirkende Phosphorverbindung
- elementarer Phosphor, insbesondere roter Phosphor, und/oder
- zumindest eine anorganische Phosphorverbindung oder Hydrolysate oder Salze davon und/oder
- zumindest eine organische Phosphorverbindung der folgenden allgemeinen Formel (I) oder (II) oder Hydrolysate oder Salze davon, ist 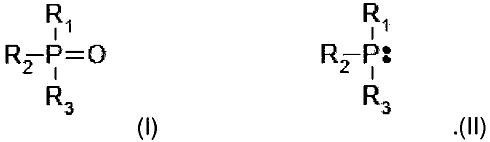 worin die Reste R₁, R₂ und R₃ jeweils unabhängig voneinander organische oder anorganische Reste bedeuten,
   und dass die als Flammschutzmittel bzw. -synergist wirkende Schwefelverbindung
- elementarer Schwefel und/oder
- zumindest eine anorganische oder organische Schwefelverbindung bzw. schwefelhältige Verbindung ist.

Überraschend wurde festgestellt, dass derart flammgeschützte *Styrol*-Polymerisate und *Styrol*-Polymerschaumstoffe eine in unerwartetem Ausmaß verbesserte Wirkung als Flammschutzmittel aufweisen. Dadurch kann die Gesamtmenge an Flammschutzmitteln verringert werden, was zu einer Vielzahl an Vorteilen, u.a. im Herstellungsverfahren, bei den Kosten, den mechanischen Eigenschaften des Produktes etc. führt. Insbesondere werden auch der Schäumprozess und die mechanischen Eigenschaften des Schaums nicht wesentlich beeinflusst wodurch ein qualitativ hochwertiges Produkt entsteht.

Unter dem Begriff der Phosphorverbindungen werden im vorliegenden Text sowohl elementarer Phosphor als auch organische und anorganische Phosphorverbindungen und/oder phosphorhältige Verbindungen sowie Hydrolysate oder Salze davon verstanden bzw. subsumiert.

Elementarer Phosphor tritt in vier allotropen Modifikationen als weißer, roter, schwarzer und violetter Phosphor auf. Jeder dieser Grundtypen bildet verschiedene Kristallstrukturen, wodurch es auch zu Unterschieden in den physikalischen Eigenschaften und Reaktivitäten kommt. Als Flammschutzmittel ist der rote Phosphor am vorteilhaftesten einsetzbar.

Als anorganische Phosphorverbindungen kommen vorteilhafterweise die (Poly)phosphate, wie nicht kondensierte Salze der phosphorigen Säure oder kondensierte Salze, wie Ammoniumphosphat und Ammoniumpolyphosphat, in Frage.

Die erfindungsgemäß verwendeten organischen Phosphorverbindungen der allgemeinen Formel (I) oder (II) 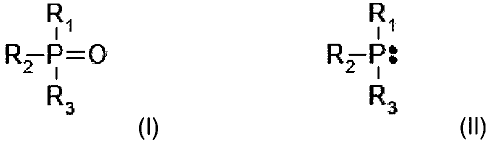 können aus den phosphororganischen Verbindungen, wie monomeren organischen Phosphorverbindungen, oder polymeren organischen Phosphorverbindungen, den anorganischen Phosphorverbindungen, etc. ausgewählt werden, wobei R₁, R₂ und R₃ unabhängig voneinander organische oder anorganische Reste bezeichnen, die dem Fachmann aus dem Stand der Technik bekannt sind.

Die Substituenten bzw. Reste R sind untereinander unabhängig und können gleich oder verschieden sein bzw. sogar ganz fehlen. Die Reste R können vorzugsweise jeweils unabhängig voneinander bedeuten: -H, substituiertes oder nicht substituiertes C₁-C₁₅-Alkyl, C₁-C₁₅-Alkenyl, C₃-C₈-Cycloalkyl, C₆-C₁₈-Aryl, C₇-C₃₀-Alkylaryl, C₁-C₈-Alkoxy oder C₁-C₈-Alkylthio, oder -OH oder -SH sowie Alkalimetall-, Erdalkalimetall-, Ammonium- oder Phosphonium-Salze davon.

Unter dem "Alkyl"-Anteil der optionalen Substituenten R der Phosphorverbindungen gemäß Formel (I) sind sowohl gesättigte als auch ungesättigte Aliphaten zu verstehen, die unverzweigt oder verzweigt sein können, wobei ungesättigte Gruppen bevorzugt sind. Die Substituenten R umfassen vorzugsweise kurzkettige Alkylgruppen mit nicht mehr als 6, noch bevorzugter nicht mehr als 4 oder 3, noch bevorzugter nicht mehr als 2, Kohlenstoffatomen bzw. Phenyl als Arylgruppe. Kürzerkettige Reste sind bevorzugt, da längerkettige Reste, ein hoher Sättigungsgrad sowie eine größere Anzahl an Substituenten die Flammschutzwirkung nachteilig beeinflussen können. Besonders wirkungsvolle Phosphorverbindungen sind bevorzugt möglichst unsubstituiert.

Falls Substituenten R vorhanden sind, weisen diese vorzugsweise einen schwefelhältigen Substituenten, wie z.B. -SH, -SO₃NH₄, -SO- oder -SO₂-, oder einen phosphorhältigen Substituenten, wie z.B. -PO(ONH₄)₂ oder dergleichen, auf, um so die Flammschutzwirkung weiter zu verbessern.

Von den optionalen Salzen etwaiger SH- oder OH-Gruppen der Phosphorverbindungen sind Ammonium- und Phosphoniumsalze bevorzugt, da diese ebenfalls zur Flammschutzwirkung beitragen können. Die Ammonium- und Phosphonium-Ionen können anstelle von Wasserstoffatomen jeweils bis zu vier organische Reste, z.B. oben definierte Substituenten R, aufweisen (d.h. NR₄⁺ bzw. PR₄⁺), wobei jedoch im Falle von Ammonium Wasserstoff als Substituent bevorzugt wird.

Beispiele für solche Phosphorverbindungen der allgemeinen Formel (I) oder (II) sind organische Phosphorverbindungen und deren Salze, wie die monomeren organischen Phosphorverbindungen, eingeschlossen Phosphorsäureester-, Phosphorsäureamidester- und Phosphonitrilverbindungen, organische Verbindungen der phosphorigen Säure, wie beispielsweise Ester der phosphorigen Säure, Verbindungen der hypophosphorigen Säure, der Phosphine und Phosphinoxide, wie beispielsweise Triphenylphosphin, Triphenylphosphinoxid und Tricresylphosphinoxid, etc.

Mit Ausnahme der halogenierten Phosphorverbindungen, haben Phosphorverbindungen den Nachteil, dass, wie einleitend erwähnt, in der Regel relativ hohe Konzentrationen davon eingesetzt werden müssen, um eine ausreichende flammhemmende Wirkung zu erzielen. In Polymerschaumstoffen führen diese hohen Konzentrationen meist zu einem Kollaps der Schaumstruktur. Daher war es Aufgabe der vorliegenden Erfindung diese Konzentrationen möglichst zu reduzieren. Dies konnte dadurch erreicht werden, dass zusätzlich schwefelhaltige Verbindungen zugegeben wurden, die überraschenderweise eine überdurchschnittliche Verbesserung der flammhemmenden Wirkung zeigten.

Eine vorteilhafte Ausführungsform der expandierbaren Styrol-Polymerisate besteht darin, dass die Phosphorverbindung(en) als Flammschutzmittel in einer Menge von 0,5 bis 25 Gew.-%, insbesondere 3 bis 15 Gew.-%, bezogen auf das Gesamtgewicht des Polymers, enthalten ist/sind.

Als vorteilhaft haben sich Phosphorverbindungen erwiesen, die bei der Analyse mittels Thermogravimetrie (TGA) unterhalb von 115°Ceine Gewichtsabnahme von kleiner 10 Gew.-% aufweisen.

Unter dem Begriff der Schwefelverbindungen werden im vorliegenden Text sowohl elementarer Schwefel als auch organische und anorganische Schwefelverbindungen und/oder schwefelhaltige Verbindungen sowie Hydrolysate oder Salze davon verstanden bzw. subsumiert.

Eine vorteilhafte Ausführungsform der expandierbaren Styrol-Polymerisate besteht darin, dass die Schwefelverbindung(en) als Flammschutzmittel in einer Menge von 0,5 bis 25 Gew.-%, insbesondere 3 bis 15 Gew.-%, bezogen auf das Gesamtgewicht des Polymers, enthalten ist/sind.

Besonders gut geeignet ist elementarer Schwefel bzw. gelber Cyclooctaschwefel (S₈), der vorteilhafterweise in einer Menge von 0,1 bis 10 Gew.-%, bevorzugt 0,5 bis 5 Gew.-%, besonders bevorzugt etwa 2 Gew.-%, bezogen auf das erhaltene EPS-Granulat zugegeben wird.

Als Schwefelverbindungen sind beispielsweise Sulfide, Sulfite, Sulfate, Sulfane, Sulfoxylate, Sulfone, Sulfonate, Thiosulfate, Thionite, Thionate, Disulfate, Sulfoxide, Schwefelnitride, Schwefelhalogenide und/oder Organoschwefelverbindungen wie Thiole, Thioether, Thiophene, etc. vorteilhaft einsetzbar.

Weiters haben sich Schwefelverbindungen als vorteilhaft erwiesen, die bei der Analyse mittels Thermogravimetrie (TGA) unterhalb von 115°C eine Gewichtsabnahme von kleiner 10 Gew.-% aufweisen, z.B Ammoniumthiosulfat, Dicaprolactamdisulfid, Zinksulfid, Polyphenylensulfid, etc..

Besonders vorteilhaft ist es, wenn die schwefelhaltige Verbindung bzw. Schwefelverbindung zumindest eine S-S-Bindung aufweist, wobei zumindest eines der Schwefelatome in zweiwertiger Form vorliegt, z.B. Disulfite, Dithionite, Cystin, Amylphenoldisulfid, Poly-tert-butylphenoldisulfid etc.

Besonders bevorzugte Kombinationen von Phosphorverbindungen und Schwefelverbindungen sind:
- Ammoniumpolyphosphat mit gelben Schwefel (S₈),
- Ammoniumpolyphosphat mit Ammoniumthiosulfat,
- Ammoniumpolyphosphat mit Zinksulfid,
- Triphenylphosphin mit Cystin und

Triphenylphosphin mit Polyphenylensulfid.

Die erfindungsgemäßen expandierbaren Polymerisate sind expandierbare Styrolpolymerisate (EPS) bzw. expandierbare Styrolpolymer Granulate (EPS), welche insbesondere aus Homo- und Copolymeren von Styrol, vorzugsweise glasklares Polystyrol (GPPS), Schlagzähpolystyrol (HIPS), anionisch polymerisiertes Polystyrol oder Schlagzähpolystyrol (A-IPS), Styrol-alpha-Methylstyrol-copolymere, Acrylnitril-Butadien-Styrolpolymerisate (ABS), Styrol-Acrylnitril (SAN) Acrylnitril-Styrol-Acrylester (ASA), Methyacrylat-Butadien-Styrol (MBS), Methylmethacrylat-Acrylnitril-Butadien-Styrol (MABS)-polymerisate oder Mischungen davon oder mit Polyphenylenether (PPE) oder Polyphenylensulfid (PPS) bestehen. Gerade für Polystyrol ist der Bedarf an qualitativ hochwertigen Produkten besonders hoch.

Die genannten Styrolpolymere können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylenterephthalat (PET) oder Polybutylenterephthalat (PBT), Polyethersulfonen (PES), Polyetherketonen oder Polyethersulfiden (PES) oder Mischungen davon in der Regel in Anteilen von insgesamt bis maximal 30 Gew.-%, bevorzugt im Bereich von 1 bis 10 Gew.-%, bezogen auf die Polymerschmelze, abgemischt werden.

Des weiteren sind Mischungen in den genannten Mengenbereichen auch mit z. B hydrophob modifizierten oder funktionalisierten Polymeren oder Oligomeren, Kautschuken, wie Polyacrylaten oder Polydienen, z. B. Styrol-Butadien-Blockcopolymeren oder biologisch abbaubaren aliphatischen oder aliphatisch/aromatischen Copolyestem möglich.

Als Verträglichkeitsvermittler eignen sich z.B. Maleinsäureanhydrid-modifizierte Styrolcopolymere, Epoxidgruppenhaltige Polymere oder Organosilane.

Die Wirksamkeit des Flammschutzsystems kann durch den Zusatz geeigneter Flammschutzsynergisten, wie die thermischen Radikalbildner Dicumylperoxid, Ditertbutylperoxid oder Dicumyl, noch weiter verbessert werden.

Auch können zusätzlich weitere Flammschutzmittel, wie Melamin, Melamincyanurate, Metalloxide, Metallhydroxide oder Synergisten wie Sb₂O₃ oder Zn-Verbindungen, eingesetzt werden.

Wenn auf die vollständige Halogenfreiheit des Polymerisats oder des Polymerschaumstoffes verzichtet werden kann, können halogenreduzierte Schaumstoffe durch die Verwendung der Phosphorverbindungen und den Zusatz geringerer Mengen an halogenhaltigen, insbesondere bromierten Flammschutzmitteln, wie Hexabromcyclododecan (HBCD), bevorzugt in Mengen im Bereich von 0,05 bis 1, insbesondere 0,1 bis 0,5 Gew.-%, hergestellt werden.

Ein weiterer Aspekt der Erfindung betrifft die Herstellung derartiger *Styrol-*Polymerisate. Erfindungsgemäß können die eingangs erwähnten flammgeschützten, expandierbaren *Styrol*-Polymerisate durch Beimischung der obenstehenden Phosphorverbindungen sowie Schwefel und/oder zumindest einer schwefelhältigen Verbindung bzw. Schwefelverbindung in an sich bekannter Weise hergestellt werden.

Eine vorteilhafte Verfahrensführung sieht dabei vor, dass eine oder mehrere Phosphorverbindungen, die Schwefelverbindung(en) und ein Treibmittel mit einer Styrolpolymerschmelze mit Hilfe eines dynamischen bzw. statischen Mischers gemischt und anschließend granuliert werden.

Alternativ kann vorgesehen werden, dass eine oder mehrere Phosphorverbindungen, sowie die Schwefelverbindung(en) mittels eines dynamischen bzw. statischen Mischers zu noch granulatförmigem Polystyrolpolymerisat zugemischt und aufgeschmolzen werden und die Schmelze anschließend mit Treibmittel versetzt und granuliert wird.

Alternativ kann weiters vorgesehen werden, dass eine oder mehrere Phosphorverbindungen und die Schwefelverbindung(en) mittels eines dynamischen bzw. statischen Mischers zu noch granulatförmigem EPS oder zugemischt werden und die Mischung anschließend aufgeschmolzen und granuliert wird.

Alternativ kann weiters vorgesehen werden, dass die Granulatherstellung durch Suspensions-Polymerisation von Styrol in wässriger Suspension in Gegenwart einer oder mehrerer Phosphorverbindungen, der Schwefelverbindung(en) und eines Treibmittels erfolgt.

Ein weiteres erfindungsgemäßes Verfahren zur Herstellung der erfindungsgemäßen flammgeschützten expandierbaren Styrolpolymerisate (EPS) umfasst die Schritte:
- Gemeinsames Dosieren in einen Extruder von PS- oder EPS-Granulat mit einem Molekulargewicht von Mw > 120 000 g/mol, bevorzugt von 150 000 bis 250 000 g/mol, besonders bevorzugt von 180 000 bis 220 000 g/mol, sowie von einer oder mehrerer Phosphorverbindungen, der Schwefelverbindung(en) und gegebenenfalls von einem oder mehreren weiteren Additiven,
- Gemeinsames Aufschmelzen aller Komponenten im Extruder
- Optionale Zudosierung zumindest eines Treibmittels
- Mischung aller Komponenten bei einer Temperatur > 120°C
- Granulierung mittels druckbeaufschlagter Unterwassergranulierung, bei z.B. 1-20 bar, zu einer Granulatgröße < 5 mm, bevorzugt 0,2 bis 2,5 mm, bei einer Wassertemperatur von 30 bis 100°C, insbesondere 50 bis 80°C,
- gegebenenfalls oberflächliche Beschichtung mit Coatingmitteln, z.B. Silikate, Metallsalze von Fettsäuren, Fettsäureester, Fettsäureamide.

Die erfindungsgemäßen halogenfrei flammgeschützten, expandierbaren Styrolpolymere (EPS) und Styrolpolymerextrusionschaumstoffe (XPS) können durch Einmischen eines Treibmittels, einer oder mehrerer Phosphorverbindungen sowie von elementarem Schwefel und/oder einer schwefelhältigen Verbindung bzw. Schwefelverbindung in die Polymerschmelze und anschließende Extrusion zu Schaumstoffplatten, Schaumstoffsträngen, oder expandierbaren Granulaten hergestellt werden.

Bevorzugt weist das expandierbare Styrolpolymer ein Molekulargewicht > 120.000, besonders bevorzugt im Bereich von 180.000 bis 220.000 g/mol auf. Aufgrund des Molekulargewichtsabbau durch Scherung und/oder Temperatureinwirkung liegt das Molekulargewicht des expandierbaren Polystyrols in der Regel etwa 10.000 g/mol unter dem Molekulargewicht des eingesetzten Polystyrols.

Der Styrolpolymerschmelze können auch Polymerrezyklate der genannten thermoplastischen Polymeren, insbesondere Styrolpolymere und expandierbare Styrolpolymere (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-%.

Die treibmittelhaltige Styrolpolymerschmelze enthält in der Regel eine oder mehrere Treibmittel in homogener Verteilung in einem Anteil von insgesamt 2 bis 10 Gew.-% bevorzugt 3 bis 7 Gew.-%, bezogen auf die treibmittelhaltige Styrolpolymerschmelze. Als Treibmittel eignen sich die üblicherweise in EPS eingesetzten physikalischen Treibmittel, wie aliphatische Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, isoPentan, n-Pentan eingesetzt. Für XPS werden bevorzugt CO₂ oder Mischungen mit Alkoholen oder Ketonen eingesetzt.

Die zugesetzte Treibmittelmenge wird so gewählt, dass die expandierbaren Styrolpolymere (EPS) ein Expansionsvermögen von 7 bis 200 g/l, bevorzugt 10 bis 50 g/l aufweisen.

Die erfindungsgemäßen expandierbaren Styrolpolymergranulate (EPS) weisen in der Regel eine Schüttdichte von höchstens 700 g/l bevorzugt im Bereich von 590 bis 660 g/l auf.

Des weiteren können der Styrolpolymerschmelze Additive, Keimbildner, Füllstoffe, Weichmacher, lösliche und unlösliche anorganische und/oder organische Farbstoffe und Pigmente, z.B. IR-Absorber, wie Russ, Graphit oder Aluminiumpulver, gemeinsam oder räumlich getrennt, z.B. über Mischer oder Seitenextruder, zugegeben werden. In der Regel werden die Farbstoffe und Pigmente in Mengen im Bereich von 0,01 bis 30, bevorzugt im Bereich von 1 bis 10 Gew.%, zugesetzt. Zur homogenen und mikrodispersen Verteilung der Pigmente in dem Styrolpolymer kann es insbesondere bei polaren Pigmenten zweckmäßig sein, ein Dispergierhilfsmittel, z.B Organosilane, epoxygruppenhaltige Polymere oder Maleinsäureanhydrid-gepfropfte Styrolpolymere, einzusetzen. Bevorzugte Weichmacher sind Mineralöle, Phthalate, die in Mengen von 0,05 bis 10 Gew.%, bezogen auf das Styrolpolymerisat, eingesetzt werden können.

Ein weiterer Aspekt der Erfindung betrifft einen *Styrol*-Polymerschaumstoff, insbesondere einen Styrolpolymer-Partikelschaumstoff oder einen extrudierten Polystyrol-Hartschaum (XPS), enthaltend als Flammschutzmittel zumindest eine der eingangs beschriebenen Phosphorverbindungen, sowie elementaren Schwefel und/oder zumindest eine schwefelhaltige Verbindung bzw. Schwefelverbindung.

Ein vorteilhafter *Styrol*-Polymerschaumstoff ist erhältlich aus den erfindungsgemäßen flammgeschützten expandierbaren *Styrol*-Polymerisaten (*EPS*), insbesondere durch Aufschäumen und Versintern der Polymerisatkügelchen oder durch Extrusion des Granulates.

Die halogenfreien, flammgeschützten *Styrol*-Polymerschaumstoffe weisen bevorzugt eine Dichte im Bereich von 8 bis 200 g/l, besonders bevorzugt im Bereich von 10 bis 50 g/l auf und sind bevorzugt zu mehr als 80 %, besonders bevorzugt zu 95 bis 100%, geschlossenzellig bzw. besitzen eine überwiegend geschlossenzellige Zellstruktur mit mehr als 0,5 Zellen pro mm³.

Erfindungsgemäß wird zumindest eine der Phosphorverbindungen, in Kombination mit Schwefel und/oder einer schwefelhältigen Verbindung bzw. Schwefelverbindung als Flammschutzmittel bzw. -synergist in expandierbaren Styrolpolymerisaten (EPS) bzw. expandierbaren Styrolpolymer Granulaten (EPS) oder in *Styrol*-Polymerschaumstoffen, insbesondere in Styrolpolymer-Partikelschaumstoffen, erhältlich durch Aufschäumen aus expandierbaren Polymerisaten, oder in extrudierten Polystyrol-Hartschäumen (XPS), eingesetzt.

Zur Herstellung von flammgeschütztem extrudierten Polystyrol-Hartschaum (XPS) werden die Phosphorverbindungen, die Schwefelverbindungen und ein Treibmittel mit einer Styrolpolymerschmelze mit Hilfe eines dynamischen bzw. statischen Mischers gemischt und anschließend geschäumt oder die Phosphorverbindungen und die Schwefelverbindungen werden mittels eines dynamischen bzw. statischen Mischers zu noch granulatförmigem Polystyrolpolymerisat zugemischt und aufgeschmolzen, und die Schmelze anschließend mit Treibmittel versetzt und geschäumt.

Dem Fachmann sind die einsetzbaren Phosphorverbindungen und die Schwefelverbindungen als solche, ebenso wie Verfahren zu ihrer Herstellung aus dem allgemeinen Fachwissen bekannt.

Verfahren zur Herstellung von damit flammgeschützten expandierbaren *Styrol*Polymerisaten, z.B. von EPS, in Form von Granulaten bzw. Perlen sind dem Fachmann ebenfalls an sich bekannt. Die Herstellung der erfindungsgemäßen *Styrol*-Polymerisate mit obenstehenden Phosphorverbindungen und Schwefelverbindungen funktioniert im wesentlichen analog. So können beispielsweise die Ausführungsbeispiele der WO 2006/027241 herangezogen werden. Ebensolches gilt auch für die *Styrol-*Polymerschaumstoffe bzw. für XPS.

Wie die Zugabe des Schwefels bzw. der Schwefelverbindungen erfolgen kann, ist ebenfalls bekannt. So kann elementarer Schwefel beispielsweise in verkapselter Form bzw. als beschichtete Granulate oder Partikel eingebracht werden.

Die vorliegende Erfindung wird gemäß ihrem ersten Aspekt nachstehend nunmehr beispielhaft anhand von fünf konkreten, jedoch nicht einschränkend zu verstehenden, Ausführungsbeispielen 1 bis 5 detailliert beschrieben. Bei den Beispielen 6 bis 10 handelt es sich um Vergleichsbeispiele, um die synergistische Wirkung des Flammschutzmittelsystems zu zeigen:

Die konkreten vorteilhaften Ausführungsbeispiele zeigen die Flammschutzmittelkombinationen aus
- Ammoniumpolyphosphat (APP) mit gelben Schwefel (S₈),
- Ammoniumpolyphosphat (APP) mit Ammoniumthiosulfat (ATS),
- Ammoniumpolyphosphat (APP) mit Zinksulfid (ZnS),
- Triphenylphosphin mit Cystin und
- Triphenylphosphin mit Polyphenylensulfid (PPS).

### Beispiel 1 (Ausführungsbeispiel - APP + S):

Einem Styrolpolymer (SUNPOR EPS-STD: 6 Gew.% Pentan, Kettenlänge Mw = 200.000 g/mol, Uneinheitlichkeit Mw/Mn =2,5) wurde im Einzugsbereich eines Doppelschneckenextruders 12 Gew.-% Ammoniumpolyphosphat (APP) und 2 Gew.-% gelber Schwefel (S₈), bezogen auf das erhaltene EPS-Granulat, beigemischt und im Extruder bei 190°C aufgeschmolzen. Die so enthaltene Polymerschmelze wurde mit einem Durchsatz von 20 kg/h durch eine Düsenplatte gefördert und mit einem druckbeaufschlagten Unterwassergranulierer zu kompakten EPS-Granulaten granuliert.

### Beispiel 2 (Ausführungsbeispiel - APP + ATS):

Einem Styrolpolymer (SUNPOR EPS-STD: 6 Gew.% Pentan, Kettenlänge Mw = 200.000 g/mol, Uneinheitlichkeit Mw/Mn =2,5) wurde im Einzugsbereich eines Doppelschneckenextruders 12 Gew.-% Ammoniumpolyphosphat (APP) und 5 Gew.% Ammoniumthiosulfat (ATS), bezogen auf das erhaltene EPS-Granulat, beigemischt und im Extruder bei 150°C aufgeschmolzen. Die so enthaltene Polymerschmelze wurde mit einem Durchsatz von 20 kg/h durch eine Düsenplatte gefördert und mit einem druckbeaufschlagten Unterwassergranulierer zu kompakten EPS-Granulaten granuliert.

### Beispiel 3 (Ausführungsbeispiel - APP + ZnS):

Einem Styrolpolymer (SUNPOR EPS-STD: 6 Gew.% Pentan, Kettenlänge Mw = 200.000 g/mol, Uneinheitlichkeit Mw/Mn =2,5) wurde im Einzugsbereich eines Doppelschneckenextruders 12 Gew.-% Ammoniumpolyphosphat (APP) und 5 Gew.-% Zinksulfid (ZnS), bezogen auf das erhaltene EPS-Granulat, beigemischt und im Extruder bei 190°C aufgeschmolzen. Die so enthaltene Polymerschmelze wurde mit einem Durchsatz von 20 kg/h durch eine Düsenplatte gefördert und mit einem druckbeaufschlagten Unterwassergranulierer zu kompakten EPS-Granulaten granuliert.

### Beispiel 4 (Ausführungsbeispiel - Triphenylphosphin + Cystin):

Einem Styrolpolymer (SUNPOR EPS-STD: 6 Gew.-% Pentan, Kettenlänge Mw = 200.000 g/mol, Uneinheitlichkeit Mw/Mn =2,5) wurde im Einzugsbereich eines Doppelschneckenextruders 12 Gew.-% Triphenylphosphin und 5 Gew.-% Cystin, bezogen auf das erhaltene EPS-Granulat, beigemischt und im Extruder bei 190°C aufgeschmolzen. Die so enthaltene Polymerschmelze wurde mit einem Durchsatz von 20 kg/h durch eine Düsenplatte gefördert und mit einem druckbeaufschlagten Unterwassergranulierer zu kompakten EPS-Granulaten granuliert.

### Beispiel 5 (Ausführungsbeispiel - Triphenylphosphin + PPS):

Einem Styrolpolymer (SUNPOR EPS-STD: 6 Gew.-% Pentan, Kettenlänge Mw = 200.000 g/mol, Uneinheitlichkeit Mw/Mn =2,5) wurde im Einzugsbereich eines Doppelschneckenextruders 12 Gew.-% Triphenylphosphin und 5 Gew.-% Polyphenylensulfid (PPS), bezogen auf das erhaltene EPS-Granulat, beigemischt und im Extruder bei 190°C aufgeschmolzen. Die so enthaltene Polymerschmelze wurde mit einem Durchsatz von 20 kg/h durch eine Düsenplatte gefördert und mit einem druckbeaufschlagten Unterwassergranulierer zu kompakten EPS-Granulaten granuliert.

### Beispiel 6 (Vergleichsbeispiel zu Beispiel 1 bis 3 - nur APP):

Beispiel 1 wurde wiederholt mit dem Unterschied, dass kein Schwefel bzw. keine Schwefelverbindung zugegeben wurde.

### Beispiel 7 (Vergleichsbeispiel zu Beispiel 4 und 5 - nur Triphenylphosphin):

Beispiel 4 wurde wiederholt mit dem Unterschied, dass kein Schwefel bzw. keine Schwefelverbindung zugegeben wurde.

### Beispiel 8 (Vergleichsbeispiel zu Beispiel 3 - nur ZnS):

Beispiel 3 wurde wiederholt mit dem Unterschied, dass keine Phosphorverbindung zugegeben wurde.

### Beispiel 9 (Vergleichsbeispiel zu Beispiel 5 - nur PPS):

Beispiel 5 wurde wiederholt mit dem Unterschied, dass keine Phosphorverbindung zugegeben wurde.

### Beispiel 10 (Referenzbeispiel - HBCD):

Einem Styrolpolymer (SUNPOR EPS-STD: 6 Gew.% Pentan, Kettenlänge MW = 200.000 g/mol, Uneinheitlichkeit MW/Mn=2,5) wurde im Einzugsbereich eines Doppelschneckenextruders 2 Gew.% HBCD (Hexabromcyclododecan), bezogen auf das erhaltene EPS-Granulat, beigemischt und im Extruder bei 190°C aufgeschmolzen. Die so enthaltene Polymerschmelze wurde mit einem Durchsatz von 20 kg/h durch eine Düsenplatte gefördert und mit einem druckbeaufschlagten Unterwassergranulierer zu kompakten EPS-Granulaten granuliert.

Nachfolgende Tabelle 1 stellt die Ergebnisse übersichtlich nebeneinander, wobei das Brandverhalten von definierten Prüfkörpern sowie die Zeit bis zum Kollaps der aufgeschäumten Schaumstoffperlen bzw. die Stabilität überprüft wurde.

**Tabelle 1: Prüfung der expandierbaren Polymerisate bzw. der Polymerschaumstoffe**

| | Brandprüfung | Stabilität |
|---|---|---|
| Versuch 1 (nach Beispiel 1) | 2 | 1 |
| Versuch 2 (nach Beispiel 2) | 2 | 1 |
| Versuch 3 (nach Beispiel 3) | 3 | 1 |
| Versuch 4 (nach Beispiel 4) | 1 | 3 |
| Versuch 5 (nach Beispiel 5) | 2 | 2 |
| Versuch 6 (nach Beispiel 6) | 5 | 1 |
| Versuch 7 (nach Beispiel 7) | 4 | 3 |
| Versuch 8 (nach Beispiel 8) | 5 | 1 |
| Versuch 9 (nach Beispiel 9) | 4 | 1 |
| Referenzversuch (nach Beispiel 10) | 1 | 1 |

Die Ergebnisse der Versuche in den beiden rechten Spalten wurden durch Prüfungen mit Produkten der zuvor beschriebenen Beispiele 1 bis 10 gewonnen.

Dabei stellen die Beispiele 6 bis 9 die Bezugspunkte für die Beispiele 1 bis 5 dar. Als Referenz für den Stand der Technik gilt Beispiel 10.

Auf diesem Referenzversuch 10 nehmen alle Bewertungen der Prüfungen Bezug, indem die Resultate mit Zahlenwerten von 1 bis 5 bezeichnet sind, wobei kleine Zahlen, insbesondere 1, dabei tendenziell vorteilhafter, größere Zahlen, insbesondere 5, nachteiliger sind.

### im Detail:

### Brandprüfung (Spalte 2 in Tabelle 1):

Die aus den Beispielen erhaltenen EPS-Granulate wurden mit gesättigtem Wasserdampf zu Schaumstoffperlen mit einer Rohdichte von 15 bis 25 kg/m³ vorgeschäumt, für 24 Stunden zwischengelagert und in einem Formteilautomaten zu Schaumstoffplatten geformt.

Aus den Schaumstoffplatten wurden Prüfkörper mit 2 cm Dicke geschnitten, die nach 72 Stunden Konditionierung bei 70°C in einem Brandtest nach DIN 4102-2 (B2 - Kleinbrennertest) unterzogen wurden.

Die mit Zahlen zwischen 1 und 5 bewerteten Ergebnisse wurden relativ zu mit Hexabromcyclododecan (HBCD) flammgeschützen EPS (Beispiel 8) bewertet. Dabei bedeuten in Spalte "Brandprüfung" Werte von 1, dass sich die Testsubstanz hinsichtlich ihres Brandverhaltens gleich gut wir HBCD-geschütztes EPS verhält. Werte von 5 bedeuten, dass das Brandverhalten sehr schlecht ist und dem von nicht flammgeschützten EPS entspricht.

### Stabilität (Spalte 3 in Tabelle 1) der Schaumstrukturen:

Die aus den Beispielen erhaltenen EPS-Granulate wurden gesättigtem Wasserdampf ausgesetzt und die Zeit bestimmt, bis ein Kollabieren der Perlen eintrat. Diese Zeit wurde in der Zusammenfassung der Ergebnisse relativ zu EPS Partikel ohne Flammschutzmittel bewertet. Durch die weichmachende Wirkung der Flammschutzmittel auf Phosphorbasis zeigten die EPS Partikel unterschiedliche Stabilität beim Vorschäumen.

Dabei bedeuten in Spalte 3 Werte von 1, dass die Perlen normale Stabilität aufweisen. Werte von 5 bedeuten, dass die Perlen unmittelbar kollabieren ohne dass eine Schaumstruktur entsteht, die für die Formteilherstellung geeignet wäre.

Wie sich aus den Ergebnissen deutlich erkennen lässt, weisen die Werkstoffe der Beispiele 1 bis 5 überraschend deutlich verbesserte Ergebnisse bei der Brandprüfung im Vergleich zu den Werkstoffen der Beispiele 6 bis 9 auf, die - vor allem auch in dieser Höhe - nicht zu erwarten waren.

Weder durch die Zugabe von Phosphorverbindungen allein (Beispiele 6 und 7) noch durch die Zugabe von Schwefelverbindungen allein (Beispiele 8 und 9) konnten vergleichbare Ergebnisse erzielt werden.

Das Brandschutzverhalten hat sich durch die gleichzeitige Zugabe der Phosphorverbindungen und der Schwefelverbindungen synergistisch gesteigert.

Die erfindungsgemäßen bzw. auf diese Weise geschützten Styrol-Polymerisate und Schaumstoffe sind somit hinsichtlich ihres Brandverhaltens wesentlich vorteilhafter als nur mit Phosphorverbindungen oder Schwefelverbindungen allein geschützte Polymerisate.

Ebenfalls überraschend wurde die Stabilität nur unwesentlich beeinflusst bzw. sogar gesteigert.

### zweiter Aspekt der Erfindung (Ansprüche 13 bis 24):

Die vorliegende Erfindung betrifft in einem zweiten, besonders vorteilhaften Aspekt flammgeschützte, zumindest ein Treibmittel enthaltende, expandierbare *Styrol-*Polymerisate, in denen als Flammschutzmittel zumindest eine Phosphorverbindung der folgenden allgemeinen Formel (I) oder Hydrolysate oder Salze davon enthalten ist: 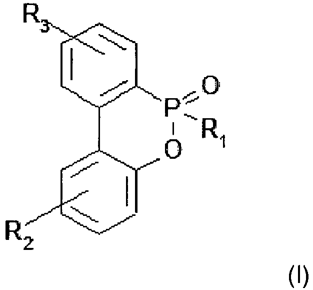 worin die Reste R jeweils unabhängig voneinander:
- H, substituiertes oder nicht substituiertes C₁-C₁₅-Alkyl, C₁-C₁₅-Alkenyl, C₃-C₈-Cycloalkyl, C₆-C₁₈-Aryl, C₇-C₃₀-Alkylaryl, C₁-C₈-Alkoxy oder C₁-C₈-Alkylthio, oder -OH oder -SH sowie Alkalimetall-, Erdalkalimetall-, Ammonium- oder Phosphonium-Salze davon, bedeuten.

Die Erfindung gemäß dem zweiten Aspekt betrifft weiters Verfahren zur Herstellung dieser Styrol-Polymerisate, weiters mit diesen Flammschutzmitteln geschützte *Styrol-*Polymerschaumstoffe und Verfahren zu deren Herstellung, sowie die besondere Verwendung obenstehender Flammschutzmittel in expandierbaren Styrol-Polymerisaten sowie Styrol-Polymerschaumstoffen.

Die Ausrüstung von Polymerschaumstoffen mit Flammschutzmitteln ist für viele Bereiche von Bedeutung bzw. vorgeschrieben. Die Reglementierungen über die Verwendung von Polystyrol-Partikelschaumstoffen aus expandierbarem Polystyrol (EPS) oder von Polystyrol-Extrusionsschaumstoffplatten (XPS) als Isoliermaterial für Gebäude verlangen in den meisten Fällen eine Flammschutzausrüstung. Polystyrol-Homo- und Copolymere werden überwiegend mit halogenhaltigen, insbesondere bromierten organischen Verbindungen wie Hexabromcyclododecan (HBCD) schwer entflammbar gemacht. Diese und eine Reihe anderer bromierter Substanzen sind jedoch auf Grund ihrer potentiellen Umwelt- und Gesundheitsgefährdung in Diskussion geraten bzw. bereits verboten.

Als Alternative existieren zahlreiche halogenfreie Flammschutzmittel. Halogenfreie Flammschutzmittel müssen jedoch zur Erreichung der gleichen Flammschutzwirkung der halogenhaltigen Flammschutzmittel in der Regel in deutlich höheren Mengen eingesetzt werden.

Unter anderem aus diesem Grund können halogenfreie Flammschutzmittel, die in kompakten thermoplastischen Polymeren einsetzbar sind, häufig nicht in gleicher Weise in Polymerschaumstoffen eingesetzt werden, da sie entweder den Schäumprozess stören oder die mechanischen und thermischen Eigenschaften des Polymerschaumstoffes beeinflussen. Bei der Herstellung von expandierbarem Polystyrol durch Suspensionspolymerisation können die hohen Flammschutzmittelmengen außerdem die Stabilität der Suspension verringern und somit das Herstellungsverfahren stören bzw. beeinträchtigen.

Die Wirkung der bei kompakten Polymeren eingesetzten Flammschutzmittel in Polymerschaumstoffen ist häufig aufgrund der Besonderheiten von derartigen Schaumstoffen und des unterschiedlichen Brandverhaltens bzw. wegen unterschiedlicher Brandtests nicht vorhersagbar.

Aus dem Stand der Technik ist diesbezüglich in der WO 2006/027241 ein halogenfreies Flammschutzmittel für Polymerschaumstoffe beschrieben, das den Schäumprozess und die mechanischen Eigenschaften nicht wesentlich beeinflusst und auch die Herstellung von überwiegend geschlossenzelligen Polymerschaumstoffen ermöglicht. Bei diesem Flammschutzmittel handelt es sich um eine seit den frühen 1970er-Jahren bekannte und gebräuchliche Phosphorverbindung, die beispielsweise gemäß der JP-A 2004-035495, der JP-A 2002-069313 oder der JP-A 2001-115047 herzustellen ist. Besonders bevorzugt, aber nicht ausschließlich, wird die Phosphorverbindung 9,10-Dihydro-9-oxa-10-phospha-phenantren-10-oxid (6H-Dibenz[c,e]-oxaphosphorin-6-oxid, DOP-O, CAS [35948-25-5]) erwähnt:

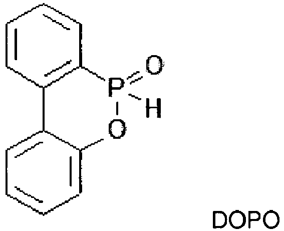

Dieses Flammschutzmittel ist bereits einigermaßen gut einsetzbar, es besteht jedoch der Bedarf, derartige Polymerisate bzw. Polymerschaumstoffe noch brandbeständiger zu machen und dies bei möglichst geringem Gehalt an Flammschutzmitteln bzw. ohne den Gehalt an Flammschutzmitteln zu erhöhen.

Aufgabe des zweiten Aspektes der vorliegenden Erfindung ist es somit, ein gut brandbeständiges flammgeschütztes expandierbares Styrol-Polymerisat mit geringem Gehalt an Flammschutzmitteln und guter Qualität zu schaffen.

Weiters ist es Aufgabe des zweiten Aspektes der Erfindung, ein vorteilhaftes Verfahren zur Herstellung derartiger *Styrol*-Polymerisate zu schaffen.

Eine weitere Aufgabe des zweiten Aspektes der Erfindung besteht darin, einen halogenfrei flammgeschützten, jedoch qualitativ entsprechenden, *Styrol*-Polymerschaumstoff mit vorteilhaftem Brandverhalten sowie guten mechanischen Eigenschaften sowie ein vorteilhaftes Herstellungsverfahren dafür zu schaffen.

Dabei ist es insbesondere wünschenswert, dass das *Styrol*-Polymerisat bzw. der *Styrol*-Polymerschaumstoff auch die strengen Anforderungen an die Brandbeständigkeit für z.B. Bauanwendungen erfüllt, wie beispielsweise den B2-Kleinbrennertest nach DIN 4102-2 oder den Brandtest nach EN 11925-2.

Diese Aufgaben werden durch die unabhängigen Ansprüche *13, 17, 20 bzw. 24* gelöst.

Die Aufgabe gemäß dem zweiten Aspekt der Erfindung wird für das *Styrol-*Polymerisat durch die kennzeichnenden Merkmale des Anspruchs 13 gelöst, indem als Flammschutzmittel bzw. -synergist zusätzlich Schwefel und/oder zumindest eine schwefelhältige Verbindung bzw. Schwefelverbindung zugegeben wird.

Überraschend wurde festgestellt, dass derart flammgeschützte *Styrol*-Polymerisate und *Styrol*-Polymerschaumstoffe eine in unerwartetem Ausmaß verbesserte Wirkung als Flammschutzmittel aufweisen. Dadurch kann die Gesamtmenge an Flammschutzmitteln verringert werden, was zu einer Vielzahl an Vorteilen, u.a. im Herstellungsverfahren, bei den Kosten, den mechanischen Eigenschaften des Produktes etc. führt. Insbesondere werden auch der Schäumprozess und die mechanischen Eigenschaften des Schaums nicht wesentlich beeinflusst wodurch ein qualitativ hochwertiges Produkt entsteht.

Die Substituenten bzw. Reste R in Formel (I) sind untereinander unabhängig und können gleich oder verschieden sein bzw. sogar ganz fehlen. So können an jedem der beiden Benzenringe der Verbindung (I) jeweils 0 bis 4 untereinander gleiche oder unterschiedliche Reste ausgebildet sein, die wiederum gleich oder unterschiedlich zu den Resten des jeweils anderen Benzenrings sind.

Unter dem "Alkyl"-Anteil der optionalen Substituenten R der Phosphorverbindungen gemäß Formel (I) sind sowohl gesättigte als auch ungesättigte Aliphaten zu verstehen, die unverzweigt oder verzweigt sein können, wobei ungesättigte Gruppen bevorzugt sind. Die Substituenten R umfassen vorzugsweise kurzkettige Alkylgruppen mit nicht mehr als 6, noch bevorzugter nicht mehr als 4 oder 3, noch bevorzugter nicht mehr als 2, Kohlenstoffatomen bzw. Phenyl als Arylgruppe. Kürzerkettige Reste sind bevorzugt, da längerkettige Reste, ein hoher Sättigungsgrad sowie eine größere Anzahl an Substituenten die Flammschutzwirkung nachteilig beeinflussen können. Besonders wirkungsvolle Phosphorverbindungen sind bevorzugt unsubstituiert, z.B. DOPO.

Falls Substituenten R vorhanden sind, weisen diese vorzugsweise einen schwefelhältigen Substituenten, wie z.B. -SH, -SO₃NH₄, -SO- oder -SO₂-, oder einen phosphorhältigen Substituenten, wie z.B. -PO(ONH₄)₂ oder dergleichen, auf, um so die Flammschutzwirkung weiter zu verbessern.

Von den optionalen Salzen etwaiger SH- oder OH-Gruppen der Phosphorverbindungen sind Ammonium- und Phosphoniumsalze bevorzugt, da diese ebenfalls zur Flammschutzwirkung beitragen können. Die Ammonium- und Phosphonium-Ionen können anstelle von Wasserstoffatomen jeweils bis zu vier organische Reste, z.B. oben definierte Substituenten R, aufweisen (d.h. NR₄⁺ bzw. PR₄⁺), wobei jedoch im Falle von Ammonium Wasserstoff als Substituent bevorzugt wird.

Besonders bevorzugter Vertreter der Phosphorverbindungen ist die Verbindung 9,10-Dihydro-9-oxa-10-phosphaphenantren-10-oxid (DOPO) 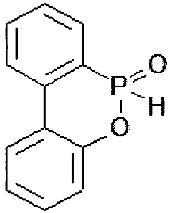 sowie ringgeöffnete Hydrolysate davon.

Bei weiteren bevorzugten Phosphorverbindungen ist der Rest R1 ein -OH, -ONH₄, -SH, - S-DOPO, oder -S-DOPS. Daraus ergeben sich folgende Phosphorverbindungen: 9,10-Dihydro-10-hydroxy-9-oxa-10-phosphaphenantren-10-oxid (DOPO-OH), 9,10-Dihydro-10-hydroxy-9-oxa-10-phosphaphenantren-10-oxid-ammoniumsalz (DOPO-ONH₄), 9,10-Dihydro-10-mercapto-9-oxa-10-phosphaphenantren-10-oxid (DOPO-SH), Bis(9,10-Dihydro-9-oxa-10-oxo-10-phosphaphenantren-10-yl)oxid (DOPO-S-DOPO) oder 9,10-Dihydro-10-(9,10-Dihydro-10-hydroxy-9-oxa-10-phospha-10-thioxophenanthren-10-ylthio)-9-oxa-10-phosphaphenantren-10-oxid (DOPO-S-DOPS).

Eine vorteilhafte Ausführungsform der expandierbaren Styrol-Polymerisate besteht darin, dass die Phosphorverbindungen als Flammschutzmittel in einer Menge von 0,5 bis 25 Gew.%, insbesondere 3 bis 15 Gew.-%, bezogen auf das Gesamtgewicht des Polymers, enthalten ist/sind.

Als Schwefelverbindungen sind beispielsweise Sulfide, Sulfite, Sulfate, Sulfane, Sulfoxylate, Sulfone, Sulfonate, Thiosulfate, Thionite, Thionate, Disulfate, Sulfoxide, Schwefelnitride, Schwefelhalogenide und/oder Organoschwefelverbindungen wie Thiole, Thioether, Thiophene, etc. verwendbar.

Besonders gut geeignet ist elementarer Schwefel bzw. gelber Cyclooctaschwefel (S₈), der vorteilhafterweise in einer Menge von 0,1 bis 10 Gew%, bevorzugt 0,5 bis 5 Gew%, besonders bevorzugt etwa 2 Gew%, bezogen auf das erhaltene EPS-Granulat zugegeben wird.

Vorteilhaft ist es, wenn die schwefelhaltigen Verbindungen bzw. Schwefelverbindungen bei einer Analyse mittels Thermogravimetrie (TGA) unterhalb von 115°C eine Gewichtsabnahme von weniger als 10 Gew.-% aufweisen, z.B. Ammoniumthiosulfat, Dicaprolactamdisulfid, Polyphenylensulfid, Zinksulfid, etc.

Besonders vorteilhaft ist es, wenn die schwefelhaltige Verbindung bzw. Schwefelverbindung zumindest eine S-S-Bindung aufweist, wobei zumindest eines der Schwefelatome in zweiwertiger Form vorliegt, z.B. Disulfite, Dithionite, Cystin, Amylphenoldisulfid, Poly-tert-butylphenoldisulfid etc.

Die erfindungsgemäßen expandierbaren Polymerisate sind expandierbare Styrol-polymerisate (EPS) bzw. expandierbare Styrolpolymer Granulate (EPS), welche insbesondere aus Homo- und Copolymeren von Styrol, vorzugsweise glasklares Polystyrol (GPPS), Schlagzähpolystyrol (HIPS), anionisch polymerisiertes Polystyrol oder Schlagzähpolystyrol (A-IPS), Styrol-alpha-Methylstyrol-copolymere, Acrylnitril-Butadien-Styrolpolymerisate (ABS), Styrol-Acrylnitril (SAN) Acrylnitril-Styrol-Acrylester (ASA), Methyacrylat-Butadien-Styrol (MBS), Methylmethacrylat-Acrylnitril-Butadien-Styrol (MABS)-polymerisate oder Mischungen davon oder mit Polyphenylenether (PPE) bestehen. Gerade für Polystyrol ist der Bedarf an qualitative hochwertigen Produkten besonders hoch.

Die genannten Styrolpolymere können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylenterephthalat (PET) oder Polybutylenterephthalat (PBT), Polyethersulfonen (PES), Polyetherketonen oder Polyethersulfiden (PES) oder Mischungen davon in der Regel in Anteilen von insgesamt bis maximal 30 Gew.-%, bevorzugt im Bereich von 1 bis 10 Gew.-%, bezogen auf die Polymerschmelze, abgemischt werden.

Des weiteren sind Mischungen in den genannten Mengenbereichen auch mit z. B hydrophob modifizierten oder funktionalisierten Polymeren oder Oligomeren, Kautschuken, wie Polyacrylaten oder Polydienen, z. B. Styrol-Butadien-Blockcopolymeren oder biologisch abbaubaren aliphatischen oder aliphatisch/aromatischen Copolyestem möglich.

Als Verträglichkeitsvermittler eignen sich z.B. Maleinsäureanhydrid-modifizierte Styrolcopolymere, Epoxidgruppenhaltige Polymere oder Organosilane.

Die Wirksamkeit der Phosphorverbindungen kann durch den Zusatz geeigneter Flammschutzsynergisten, wie die thermischen Radikalbildner Dicumylperoxid, Ditertbutylperoxid oder Dicumyl, noch weiter verbessert werden.

Auch können zusätzlich weitere Flammschutzmittel, wie Melamin, Melamincyanurate, Metalloxide, Metallhydroxide, Phosphate, Phosphinate oder Synergisten wie Sb₂O₃ oder Zn-Verbindungen, eingesetzt werden.

Wenn auf die vollständige Halogenfreiheit des Polymerisats oder des Polymer-schaumstoffes verzichtet werden kann, können halogenreduzierte Schaumstoffe durch die Verwendung der Phosphorverbindungen und den Zusatz geringerer Mengen an halogen-haltigen, insbesondere bromierten Flammschutzmitteln, wie Hexabromcyclododecan (HBCD), bevorzugt in Mengen im Bereich von 0,05 bis 1, insbesondere 0,1 bis 0,5 Gew.-%, hergestellt werden.

Ein weiterer Aspekt der Erfindung betrifft die Herstellung derartiger *Styrol-*Polymerisate. Erfindungsgemäß können die eingangs erwähnten flammgeschützten, expandierbaren Styrol-Polymerisate durch Beimischung der obenstehenden Flammschutzmittel sowie Schwefel und/oder zumindest einer schwefelhältigen Verbindung bzw. Schwefelverbindung in an sich bekannter Weise hergestellt werden.

Eine vorteilhafte Verfahrensführung sieht dabei vor, dass das Flammschutzmittel, beispielsweise DOPO, die Schwefelverbindung(en) und ein Treibmittel mit einer Styrolpolymerschmelze mit Hilfe eines dynamischen bzw. statischen Mischers gemischt und anschließend granuliert werden.

Alternativ kann vorgesehen werden, dass das Flammschutzmittel, beispielsweise DOPO, sowie die Schwefelverbindung(en) mittels eines dynamischen bzw. statischen Mischers zu noch granulatförmigem Polystyrolpolymerisat zugemischt und aufgeschmolzen werden und die Schmelze anschließend mit Treibmittel versetzt und granuliert wird.

Alternativ kann weiters vorgesehen werden, dass das Flammschutzmittel, beispielsweise DOPO und die Schwefelverbindung(en) mittels eines dynamischen bzw. statischen Mischers zu noch granulatförmigem EPS oder zugemischt werden und die Mischung anschließend aufgeschmolzen und granuliert wird.

Alternativ kann weiters vorgesehen werden, dass die Granulatherstellung durch Suspensions-Polymerisation von Styrol in wässriger Suspension in Gegenwart des Flammschutzmittels, beispielsweise DOPO, der Schwefelverbindung(en) und eines Treibmittels erfolgt.

Ein weiteres erfindungsgemäßes Verfahren zur Herstellung der erfindungsgemäßen flammgeschützten expandierbaren Styrolpolymerisate (EPS) umfasst die Schritte:
- Gemeinsames Dosieren in einen Extruder von PS- oder EPS-Granulat mit einem Molekulargewicht von Mw > 120 000 g/mol, bevorzugt von 150 000 bis 250 000 g/mol, besonders bevorzugt von 180 000 bis 220 000 g/mol, sowie von dem Flammschutzmittel, insbesondere DOPO, der Schwefelverbindung und gegebenenfalls von einem oder mehreren weiteren Additiven,
- Gemeinsames Aufschmelzen aller Komponenten im Extruder
- Optionale Zudosierung zumindest eines Treibmittels
- Mischung aller Komponenten bei einer Temperatur > 120°C
- Granulierung mittels druckbeaufschlagter Unterwassergranulierung, bei z.B. 1-20 bar, zu einer Granulatgröße < 5 mm, bevorzugt 0,2 bis 2,5 mm, bei einer Wassertemperatur von 30 bis 100°C, insbesondere 50 bis 80°C,
- gegebenenfalls oberflächliche Beschichtung mit Coatingmitteln, z.B. Silikate, Metallsalze von Fettsäuren, Fettsäureester, Fettsäureamide.

Die erfindungsgemäßen halogenfrei flammgeschützten, expandierbaren Styrolpolymere (EPS) und Styrolpolymerextrusionschaumstoffe (XPS) können durch Einmischen eines Treibmittels, einer Phosphorverbindung der allgemeinen Formel (I) oder des Hydrolyseproduktes oder eines Salzes davon, sowie von elementarem Schwefel und/oder einer schwefelhältigen Verbindung bzw. Schwefelverbindung in die Polymerschmelze und anschließende Extrusion zu Schaumstoffplatten, Schaumstoffsträngen, oder expandierbaren Granulaten hergestellt werden.

Bevorzugt weist das expandierbare Styrolpolymer ein Molekulargewicht > 120.000, besonders bevorzugt im Bereich von 180.000 bis 220.000 g/mol auf. Aufgrund des Molekulargewichtsabbau durch Scherung und/oder Temperatureinwirkung liegt das Molekulargewicht des expandierbaren Polystyrols in der Regel etwa 10.000 g/mol unter dem Molekulargewicht des eingesetzten Polystyrols.

Der Styrolpolymerschmelze können auch Polymerrezyklate der genannten thermoplastischen Polymeren, insbesondere Styrolpolymere und expandierbare Styrolpolymere (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-%.

Die treibmittelhaltige Styrolpolymerschmelze enthält in der Regel eine oder mehrere Treibmittel in homogener Verteilung in einem Anteil von insgesamt 2 bis 10 Gew.-% bevorzugt 3 bis 7 Gew.-%, bezogen auf die treibmittelhaltige Styrolpolymerschmelze. Als Treibmittel eignen sich die üblicherweise in EPS eingesetzten physikalischen Treibmittel, wie aliphatische Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, isoPentan, n-Pentan eingesetzt. Für XPS werden bevorzugt CO₂ oder Mischungen mit Alkoholen oder Ketonen eingesetzt.

Die zugesetzte Treibmittelmenge wird so gewählt, dass die expandierbaren Styrolpolymere (EPS) ein Expansionsvermögen von 7 bis 200 g/l, bevorzugt 10 bis 50 g/l aufweisen.

Die erfindungsgemäßen expandierbaren Styrolpolymergranulate (EPS) weisen in der Regel eine Schüttdichte von höchstens 700 g/l bevorzugt im Bereich von 590 bis 660 g/l auf.

Des weiteren können der Styrolpolymerschmelze Additive, Keimbildner, Füllstoffe, Weichmacher, lösliche und unlösliche anorganische und/oder organische Farbstoffe und Pigmente, z.B. IR-Absorber, wie Russ, Graphit oder Aluminiumpulver, gemeinsam oder räumlich getrennt, z.B. über Mischer oder Seitenextruder, zugegeben werden. In der Regel werden die Farbstoffe und Pigmente in Mengen im Bereich von 0,01 bis 30, bevorzugt im Bereich von 1 bis 10 Gew.-%, zugesetzt. Zur homogenen und mikrodispersen Verteilung der Pigmente in dem Styrolpolymer kann es insbesondere bei polaren Pigmenten zweckmäßig sein, ein Dispergierhilfsmittel, z.B Organosilane, epoxygruppenhaltige Polymere oder Maleinsäureanhydrid-gepfropfte Styrolpolymere, einzusetzen. Bevorzugte Weichmacher sind Mineralöle, Phthalate, die in Mengen von 0,05 bis 10 Gew.%, bezogen auf das Styrolpolymerisat, eingesetzt werden können.

Ein weiterer Aspekt der Erfindung betrifft einen *Styrol*-Polymerschaumstoff, insbesondere einen Styrolpolymer-Partikelschaumstoff oder einen extrudierten Polystyrol-Hartschaum (XPS), enthaltend als Flammschutzmittel zumindest eine der eingangs erwähnten Phosphorverbindungen der allgemeinen Formel (I) bzw. ringgeöffnete Hydrolysate oder Salze davon, sowie elementaren Schwefel und/oder zumindest eine schwefelhältige Verbindung bzw. Schwefelverbindung.

Ein vorteilhafter *Styrol*-Polymerschaumstoff ist erhältlich aus den erfindungsgemäßen flammgeschützten expandierbaren Styrolpolymerisaten (EPS), insbesondere durch Aufschäumen und Versintern der Polymerisatkügelchen oder durch Extrusion des Granulates.

Die halogenfreien, flammgeschützten *Styrol*-Polymerschaumstoffe weisen bevorzugt eine Dichte im Bereich von 8 bis 200 g/l, besonders bevorzugt im Bereich von 10 bis 50 g/l auf und sind bevorzugt zu mehr als 80 %, besonders bevorzugt zu 95 bis 100%, geschlossenzellig bzw. besitzen eine überwiegend geschlossenzellige Zellstruktur mit mehr als 0,5 Zellen pro mm³.

Erfindungsgemäß wird zumindest eine der Phosphorverbindungen der allgemeinen Formel (I) bzw. ringgeöffnete Hydrolysate oder Salze davon, in Kombination mit Schwefel und/oder einer schwefelhältigen Verbindung bzw. Schwefelverbindung als Flammschutzmittel bzw. -synergist in expandierbaren Styrolpolymerisaten (EPS) bzw. expandierbaren Styrolpolymer Granulaten (EPS) oder in *Styrol*-Polymerschaumstoffen, insbesondere in Styrolpolymer-Partikelschaumstoffen, erhältlich durch Aufschäumen aus expandierbaren Polymerisaten, oder in extrudierten Polystyrol-Hartschäumen (XPS), eingesetzt.

Zur Herstellung von flammgeschütztem extrudierten Polystyrol-Hartschaum (XPS) werden die Phosphorverbindungen, die Schwefelverbindungen und ein Treibmittel mit einer Styrolpolymerschmelze mit Hilfe eines dynamischen bzw. statischen Mischers gemischt und anschließend geschäumt oder die Phosphorverbindungen und die Schwefelverbindungen werden mittels eines dynamischen bzw. statischen Mischers zu noch granulatförmigem Polystyrolpolymerisat zugemischt und aufgeschmolzen, und die Schmelze anschließend mit Treibmittel versetzt und geschäumt.

Die bei der Erfindung einsetzbaren Phosphorverbindungen gemäß (I) und deren Herstellung ist dem Fachmann hinlänglich bekannt. Die Herstellung von damit flammgeschützten expandierbaren *Styrol*-Polymerisaten, z.B. von EPS, in Form von Granulaten bzw. Perlen ist dem Fachmann an sich ebenfalls bekannt. Die Herstellung der erfindungsgemäßen Polymerisate mit obenstehenden Flammschutzmitteln und Schwefel bzw. einer Schwefelverbindung funktioniert im wesentlichen analog. So können beispielsweise die Ausführungsbeispiele der WO 2006/027241 herangezogen werden. Ebensolches gilt auch für die Polymerschaumstoffe bzw. für XPS.

Wie die Zugabe des Schwefels bzw. der Schwefelverbindungen erfolgen kann, ist ebenfalls bekannt. So kann elementarer Schwefel beispielsweise in verkapselter Form bzw. als beschichtete Granulate oder Partikel eingebracht werden.

Die vorliegende Erfindung gemäß dem zweiten Aspekt wird nachstehend nunmehr beispielhaft anhand von vier konkreten, jedoch nicht einschränkend zu verstehenden, Ausführungsbeispielen 1 bis 4 detailliert beschrieben. Bei den Beispielen 5 bis 8 handelt es sich um Vergleichsbeispiele, um die synergistische Wirkung von DOPO und Schwefel zu zeigen:

### Beispiel 1 (Ausführungsbeispiel - DOPO 7,5%+S):

Einem Styrolpolymer (SUNPOR EPS-STD: 6 Gew% Pentan, Kettenlänge MW = 200.000 g/mol, Uneinheitlichkeit MW/Mn =2,5) wurde im Einzugsbereich eines Doppelschneckenextruders 7,5 Gew% 9,10-Dihydro-9-oxa-10-phospha-phenanthren-10-oxid (DOPO) und 2 Gew% gelber Schwefel (S₈), bezogen auf das erhaltene EPS-Granulat, beigemischt und im Extruder bei 190°C aufgeschmolzen. Die so enthatene Polymerschmelze wurde mit einem Durchsatz von 20 kg/h durch eine Düsenplatte gefördert und mit einem druckbeaufschlagten Unterwassergranulierer zu kompakten EPS-Granulaten granuliert.

### Beispiel 2 (Ausführungsbeispiel - DOPO 15%+S):

Beispiel 1 wurde wiederholt mit dem Unterschied, dass 15 Gew% 9,10-Dihydro-9-oxa-10-phospha-phenanthren-10-oxid (DOPO), bezogen auf das erhaltene EPS-Granulat, zudosiert wurden.

### Beispiel 3 (Ausführungsbeispiel - DOPO 15%+ATS):

Beispiel 2 wurde wiederholt mit dem Unterschied, dass 6 Gew% Ammoniumthiosulfat (ATS), bezogen auf das erhaltene EPS-Granulat, zudosiert wurden.

### Beispiel 4 (Ausführungsbeispiel - DOPO 15%+DCDS):

Beispiel 2 wurde wiederholt mit dem Unterschied, dass 7 Gew% Dicaprolactamdisulfid (DCDS), bezogen auf das erhaltene EPS-Granulat, zudosiert wurden.

### Beispiel 5 (Vergleichsbeispiel zu Beispiel 1 - nur DOPO 7,5% - ohne S):

Beispiel 1 wurde wiederholt mit dem Unterschied, dass kein Schwefel zugegeben wurde.

### Beispiel 6 (Vergleichsbeispiel zu Beispiel 2 - nur DOPO 15% - ohne S):

Beispiel 2 wurde wiederholt mit dem Unterschied, dass kein Schwefel zugegeben wurde.

### Beispiel 7 (Vergleichsbeispiel - nur S - ohne DOPO):

Einem Styrolpolymer (SUNPOR EPS-STD: 6 Gew% Pentan, Kettenlänge MW = 200.000 g/mol, Uneinheitlichkeit MW/Mn=2,5) wurde im Einzugsbereich eines Doppelschneckenextruders 2 Gew% gelber Schwefel (S₈), bezogen auf das erhaltene EPS-Granulat, beigemischt und im Extruder bei 190°C aufgeschmolzen. Die so enthaltene Polymerschmelze wurde mit einem Durchsatz von 20 kg/h durch eine Düsenplatte gefördert und mit einem druckbeaufschlagten Unterwassergranulierer zu kompakten EPS-Granulaten granuliert.

### Beispiel 8 (Vergleichsbeispiel - nur HBCD - ohne S, ohne DOPO):

Einem Styrolpolymer (SUNPOR EPS-STD: 6 Gew% Pentan, Kettenlänge MW = 200.000 g/mol, Uneinheitlichkeit MW/Mn=2,5) wurde im Einzugsbereich eines Doppelschneckenextruders 2 Gew% HBCD (Hexabromcyclododecan), bezogen auf das erhaltene EPS-Granulat, beigemischt und im Extruder bei 190°C aufgeschmolzen. Die so enthaltene Polymerschmelze wurde mit einem Durchsatz von 20 kg/h durch eine Düsenplatte gefördert und mit einem druckbeaufschlagten Unterwassergranulierer zu kompakten EPS-Granulaten granuliert.

Nachfolgende Tabelle 1 stellt die Ergebnisse übersichtlich nebeneinander, wobei das Brandverhalten von definierten Prüfkörpern, die Stabilität bzw. die Zeit bis zum Kollaps der aufgeschäumten Schaumstoffperlen sowie der Geruch überprüft wurden.

**Tabelle 1: Prüfung der erfindungsgemäßen Polymerisate bzw. der Polymerschaumstoffe**

| | Brandprüfung | Stabilität | Geruch |
|---|---|---|---|
| Versuch 1 (nach Beispiel 1) | 3 | 3 | 4 |
| Versuch 2 (nach Beispiel 2) | 1 | 4 | 4 |
| Versuch 3 (nach Beispiel 3) | 1 | 2 | 3 |
| Versuch 4 (nach Beispiel 4) | 1 | 3 | 2 |
| Versuch 5 (nach Beispiel 5) | 5 | 2 | 1 |
| Versuch 6 (nach Beispiel 6) | 4 | 4 | 1 |
| Versuch 7 (nach Beispiel 7) | 5 | 1 | 4 |
| Versuch 8 (nach Beispiel 8) | 1 | 1 | 1 |

Die Ergebnisse der Versuche in den rechten Spalten wurden durch Prüfungen mit Produkten der zuvor beschriebenen Beispiele 1 bis 8 gewonnen.

Dabei stellt z.B. Beispiel 6, entsprechend einem nur mit DOPO und ohne Schwefel flammgeschützten Polymerisat bzw. Schaumstoff, einen direkten Referenz- bzw. Bezugspunkt zu den Beispielen 2, 3 und 4 dar, da die gleichen Mengen an DOPO enthalten sind.

Als weitere Referenz für den Stand der Technik gilt Beispiel 8. Auf diesen Referenz-Versuch 8 nehmen alle Bewertungen der Prüfungen Bezug, indem die Resultate mit Zahlenwerten von 1 bis 5 bezeichnet sind, wobei kleine Zahlen, insbesondere 1, dabei tendenziell vorteilhafter, größere Zahlen, insbesondere 5, nachteiliger sind.

### im Detail:

### Brandprüfung (Spalte 2 in Tabelle 1)::

Die aus den Beispielen erhaltenen EPS-Granulate wurden mit gesättigtem Wasserdampf zu Schaumstoffperlen mit einer Rohdichte von 15 bis 25 kg/m³ vorgeschäumt, für 24 Stunden zwischengelagert und in einem Formteilautomaten zu Schaumstoffplatten geformt.

Aus den Schaumstoffplatten wurden Prüfkörper mit 2 cm Dicke geschnitten, die nach 72 Stunden Konditionierung bei 70°C in einem Brandtest nach DIN 4102-2 (B2 - Kleinbrennertest) unterzogen wurden.

Die mit Zahlen zwischen 1 und 5 bewerteten Ergebnisse wurden relativ zu mit Hexabromcyclododecan (HBCD) flammgeschützen EPS (Beispiel 8) bewertet. Dabei bedeuten in der Spalte "Brandprüfung" Werte von 1, dass sich die Testsubstanz hinsichtlich ihres Brandverhaltens gleich gut wir HBCD-geschütztes EPS verhält. Werte von 5 bedeuten, dass das Brandverhalten sehr schlecht ist und dem von nicht flammgeschützten EPS entspricht.

### Stabilität der Schaumstrukturen (Spalte 3 in Tabelle 1):

Die aus den Beispielen erhaltenen EPS-Granulate wurden gesättigtem Wasserdampf ausgesetzt und die Zeit bis ein Kollabieren der Perlen eintrat, bestimmt. Diese Zeit wurde in der Zusammenfassung der Ergebnisse relativ zu EPS Partikel ohne Flammschutzmittel bewertet. Durch die weichmachende Wirkung der Flammschutzmittel auf Phosphorbasis zeigten die EPS Partikel unterschiedliche Stabilität beim Vorschäumen.

Dabei bedeuten in Spalte 3 Werte von 1, dass die Perlen normale Stabilität aufweisen. Werte von 5 bedeuten, dass die Perlen unmittelbar kollabieren, ohne dass eine Schaumstruktur entsteht, die für die Formteilherstellung geeignet wäre.

### Geruch (Spalte 4 in Tabelle 1):

Die aus den Beispielen erhaltenen EPS-Granulate wurden mit gesättigtem Wasserdampf zu Schaumstoffperlen mit einer Rohdichte von 15 bis 25 kg/m³ vorgeschäumt, für 24 Stunden zwischengelagert und in einem Formteilautomaten zu Schaumstoffplatten geformt.

Aus den Schaumstoffplatten wurden Prüfkörper mit 2 cm Dicke geschnitten und einer sensorischen Geruchsprüfung durch mehrere Labormitarbeiter unterzogen. Die Bewertung erfolgte subjektiv nach den Kriterien "nicht wahrnehmbar" entsprechend der Bewertung 1 bis "unangenehm störend" mit der Bewertung 5..

Wie sich aus den Versuchen deutlich erkennen lässt, weisen die Werkstoffe der Beispiele 2, 3 und 4 eine deutlich verbesserte Brandprüfung im Vergleich zum Werkstoff von Beispiel 6 auf. Obwohl, wie aus Beispiel 7 ersichtlich, die Zugabe nur von Schwefel allein ein vergleichlich schlechteres Brandverhalten liefert, ergaben sich in den Versuchen 2 bis 4 überraschend gute Ergebnisse, die auch in dieser Höhe nicht zu erwarten waren. Die erfindungsgemäßen bzw. auf diese Weise geschützten *Styrol-*Polymerisate und Schaumstoffe sind somit zumindest hinsichtlich ihres Brandverhaltens wesentlich vorteilhafter als nur mit DOPO allein geschützte Polymerisate als auch mit reinem Schwefel versetzte Polymerisate.

Bereits bei geringeren Mengen an DOPO zeigte sich eine deutliche und unerwartete Steigerung bzw. Verbesserung der Brandbeständigkeit (Beispiel 1 im Vergleich zu Beispiel 5).

Ebenfalls überraschend wurde die Stabilität nur unwesentlich beeinflusst bzw. sogar gesteigert.

Auf den Geruch hatte die Zugabe der schwefelhältigen Substanzen zwar einen nachweisbaren Effekt, doch hielt sich dieser beispielsweise bei Versuch 4 mit Dicaprolactamdisulfid in Grenzen.

## Patentansprüche

1. Flammgeschützte, vorzugsweise halogenfrei flammgeschützte, zumindest ein Treibmittel enthaltende, expandierbare Styrolpolymerisate (EPS) bzw. expandierbare Styrolpolymer Granulate (EPS), in denen als Flammschutzmittelsystem eine Kombination aus zumindest einer Phosphorverbindung als Flammschutzmittel und zumindest einer Schwefelverbindung, schwefelhältigen Verbindung und/oder Schwefel als zusätzliches Flammschutzmittel bzw. -synergist enthalten ist, **dadurch gekennzeichnet, dass**
a) die Phosphorverbindung
- elementarer Phosphor, insbesondere roter Phosphor, und/oder
- zumindest eine anorganische Phosphorverbindung oder Hydrolysate oder Salze davon und/oder
- zumindest eine organische Phosphorverbindung der folgenden allgemeinen Formel (I) oder (II) oder Hydrolysate oder Salze davon, ist 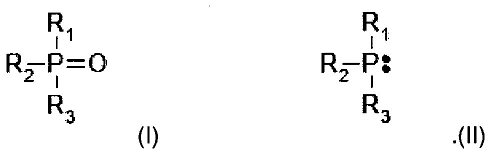 worin die Reste R₁, R₂ und R₃ jeweils unabhängig voneinander organische oder anorganische Reste bedeuten,
und dass
b) die Schwefelverbindung
- elementarer Schwefel und/oder
- zumindest eine anorganische oder organische Schwefelverbindung bzw. schwefelhältige Verbindung ist.

2. Expandierbare Polymerisate nach Anspruch 1, **dadurch gekennzeichnet, dass** die Phosphorverbindung(en) in einer Menge von 0,5 bis 25 Gew.-%, insbesondere 3 bis 15 Gew.-%, bezogen auf das Gesamtgewicht des Polymers, enthalten ist/sind,
und/oder
dass die Phosphorverbindung(en) bei einer Analyse mittels Thermogravimetrie unterhalb von 115°C eine Gewichtsabnahme von weniger als 10 Gew.-% aufweisen.

3. Expandierbare Polymerisate nach einem der vorangehenden Ansprüche, **dadurch gekennzeichnet, dass** die Schwefelverbindung(en) in einer Menge von 0,5 bis 25 Gew.-%, insbesondere 3 bis 15 Gew.-%, bezogen auf das Gesamtgewicht des Polymers, enthalten ist/sind,
oder
dass gelber Cyclooctaschwefel (S₈) in einer Menge von 0,1 bis 10 Gew.-%, insbesondere in einer Menge von etwa 0,5 bis 5 Gew.-%, vorzugsweise etwa 2 Gew.-%, bezogen auf das Gesamtgewicht des Polymers enthalten ist,
und/oder
dass die Schwefelverbindung(en) bei einer Analyse mittels Thermogravimetrie unterhalb von 115°C eine Gewichtsabnahme von weniger als 10 Gew.-% aufweisen.
und/oder
dass die Schwefelverbindung(en) zumindest eine S-S-Bindung aufweist, wobei zumindest eines der Schwefelatome in zweiwertiger Form vorliegt, z.B. Cystin, Amylphenoldisulfid und/oder Poly-tert-butylphenoldisulfid.

4. Expandierbare Polymerisate nach einem der vorangehenden Ansprüche, **dadurch gekennzeichnet, dass** die expandierbaren Polymerisate aus Homo- und Copolymeren von Styrol, vorzugsweise glasklares Polystyrol (GPPS), Schlagzähpolystyrol (HIPS), anionisch polymerisiertes Polystyrol oder Schlagzähpolystyrol (A-IPS), Styrol-alpha-Methylstyrol-copolymere, Acrylnitril-Butadien-Styrolpolymerisate (ABS), Styrol-Acrylnitril (SAN) Acrylnitril-Styrol-Acrylester (ASA), Methyacrylat-Butadien-Styrol (MBS), Methylmethacrylat-Acrylnitril-Butadien-Styrol (MABS)-polymerisate oder Mischungen davon oder mit Polyphenylenether (PPE) oder Polyphenylensulfid (PPS) bestehen.

5. Verfahren zur Herstellung von flammgeschützten, expandierbaren Styrolpolymerisaten gemäß einem der Ansprüche 1 bis 4, **dadurch gekennzeichnet, dass** als Flammschutzmittel zumindest eine Phosphorverbindung gemäß einem der vorangehenden Ansprüche sowie als zusätzliches Flammschutzmittel bzw. -synergist zumindest eine Schwefelverbindung gemäß einem der vorangehenden Ansprüche eingesetzt wird.

6. Verfahren zur Herstellung von flammgeschützten, expandierbaren Styrolpolymerisaten (EPS) nach Anspruch 5,
- wobei die Phosphorverbindung(en) und die Schwefelverbindung(en) und ein Treibmittel mit einer Styrolpolymerschmelze mit Hilfe eines dynamischen bzw. statischen Mischers gemischt und anschließend granuliert werden
oder
- wobei die Phosphorverbindung(en) und die Schwefelverbindung(en) mittels eines dynamischen bzw. statischen Mischers zu noch granulatförmigem Polystyrolpolymerisat zugemischt und aufgeschmolzen werden, und die Schmelze anschließend mit Treibmittel versetzt und granuliert wird
oder
- wobei die Phosphorverbindung(en) und die Schwefelverbindung(en) mittels eines dynamischen bzw. statischen Mischers zu noch granulatförmigem EPS oder zugemischt werden, und die Mischung anschließend aufgeschmolzen und granuliert wird
oder
- wobei die Granulatherstellung durch Suspensions-Polymerisation von Styrol in wässriger Suspension in Gegenwart der Phosphorverbindung(en) und der Schwefelverbindung(en) und eines Treibmittels erfolgt.

7. Verfahren zur Herstellung von flammgeschützten expandierbaren Styrolpolymerisaten (EPS) nach Anspruch 5 oder 6 umfassend die Schritte:
- Gemeinsames Dosieren in einen Extruder von PS- oder EPS-Granulat mit einem Molekulargewicht von Mw > 120 000 g/mol, bevorzugt von 150 000 bis 250 000 g/mol, besonders bevorzugt von 180 000 bis 220 000 g/mol, sowie von den Phosphorverbindung(en) und den Schwefelverbindung(en) und gegebenenfalls von einem oder mehreren weiteren Additiven, insbesondere
a) Flammschutzsynergisten, z.B. thermische Radikalbildner, wie Dicumylperoxid, in einer Konzentration von 0,1 bis 20 Gew.-%,
b) Infrarottrübungsmittel, z.B. Graphit, Ruß, Aluminium, Titandioxid, in einer Konzentration von 0,1 bis 1 Gew.%,
c) Stabilisatoren, z.B. Nitroxyl-Radikal bildende Substanzen, wie HTEMPO, in einer Konzentration von 0,1 bis 1 Gew.%,
d) weitere halogenierte oder halogenfreie Flammschutzmittel, z.B. HBCD, DOP-O, Magnesiumhydroxid, in einer Konzentration von 0,1 bis 20 Gew.-% und/oder
e) Füllstoffe, z.B. Kreide, Talkum, Silikate, in einer Konzentration von 1 bis 20 Gew.-%
- Gemeinsame Aufschmelzung aller Komponenten im Extruder,
- Optionale Zudosierung zumindest eines Treibmittels,
- Mischung aller Komponenten bei einer Temperatur > 120°C,
- Granulierung mittels druckbeaufschlagter Unterwassergranulierung, bei z.B. 1-20 bar, zu einer Granulatgröße < 5 mm, bevorzugt 0,2 bis 2,5 mm, bei einer Wassertemperatur von 30 bis 100°C, insbesondere 50 bis 80° C,
- gegebenenfalls oberflächliche Beschichtung mit Coatingmitteln, z.B. Silikate, Metallsalze von Fettsäuren, Fettsäureester, Fettsäureamide.

8. Flammgeschützte, expandierbare Styrolpolymerisate (EPS) erhältlich nach einem Verfahren gemäß einem der Ansprüche 5 9 bis 7.

9. Styrolpolymerschaumstoff, insbesondere Styrolpolymer-Partikelschaumstoff oder extrudierter Polystyrol-Hartschaum (XPS), enthaltend als Flammschutzmittel zumindest eine Phosphorverbindung gemäß einem der Ansprüche 1 oder 2 sowie als zusätzliches Flammschutzmittel bzw. -synergist zumindest eine Schwefelverbindung gemäß einem der Ansprüche 1 oder 3.

10. Styrolpolymerschaumstoff nach Anspruch 9 erhältlich aus flammgeschützten expandierbaren Polymerisaten gemäß einem der Ansprüche 1 bis 4, insbesondere durch Aufschäumen und Versintern der Polymerisate oder durch Extrusion.

11. Styrolpolymerschaumstoff nach Anspruch 9 oder 10 mit einer Dichte zwischen 7 und 200 g/l und/oder einer überwiegend geschlossenzelligen Zellstruktur mit mehr als 0,5 Zellen pro mm³ bzw. einer Struktur bei der mehr als 80% der Zellen geschlossenzellig sind.

12. Verwendung von zumindest einer Phosphorverbindung als Flammschutzmittel gemäß einem der Ansprüche 1 oder 2, in Kombination mit zumindest einer Schwefelverbindung als zusätzliches Flammschutzmittel bzw. -synergist gemäß einem der Ansprüche 1 oder 3,
- in expandierbaren Styrolpolymerisaten (EPS) bzw. expandierbaren Styrolpolymer Granulaten (EPS) gemäß einem der Ansprüche 1 bis 4,
oder
- in Styrolpolymerschaumstoffen, insbesondere in Styrolpolymer-Partikelschaumstoffen, erhältlich durch Aufschäumen aus expandierbaren Polymerisaten, oder in extrudierten Polystyrol-Hartschäumen (XPS).

13. Flammgeschützte, zumindest ein Treibmittel enthaltende, expandierbare *Styrolpolymerisate (EPS) bzw. expandierbare Styrolpolymer Granulate,* in denen als Flammschutzmittel zumindest eine Phosphorverbindung der folgenden allgemeinen Formel (I) oder Hydrolysate oder Salze davon enthalten ist: 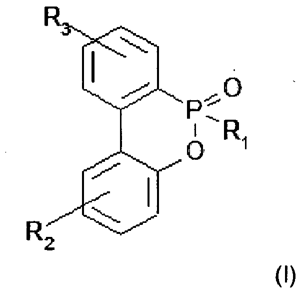 worin die Reste R jeweils unabhängig voneinander:
- H, substituiertes oder nicht substituiertes C₁-C₁₅-Alkyl, C₁-C₁₅-Alkenyl, C₃-C₈-Cycloalkyl, C₆-C₁₈-Aryl, C₇-C₃₀-Alkylaryl, C₁-C₈-Alkoxy oder C₁-C₈-Alkylthio, oder -OH oder -SH sowie Alkalimetall-, Erdalkalimetall-, Ammonium- oder Phosphonium-Salze davon, bedeuten, **dadurch gekennzeichnet, dass** als zusätzliches Flammschutzmittel bzw. -synergist Schwefel und/oder zumindest eine schwefelhältige Verbindung bzw. Schwefelverbindung enthalten ist.

14. Expandierbare Polymerisate nach Anspruch 13, **dadurch gekennzeichnet, dass** die Reste R Alkyl-, Alkoxy- oder Alkylthiogruppen mit 1 bis 4 Kohlenstoffatomen, noch bevorzugter 1 oder 2 Kohlenstoffatomen, darstellen,
und/oder
dass die Reste R einen schwefel- bzw. phosphorhältigen Substituenten aufweisen, und/oder
dass als Phosphorverbindung 9,10-Dihydro-9-oxa-10-phosphaphenantren-10-oxid (DOPO), 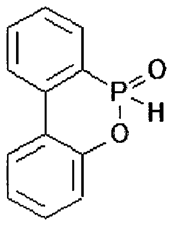 dessen Hydrolyseprodukt oder Metallsalz enthalten ist,
und/oder
dass die Phosphorverbindung(en) als Flammschutzmittel in einer Menge von 0,5 bis 25 Gew.-%, insbesondere 3 bis 15 Gew.-%, bezogen auf das Gesamtgewicht des Polymers, enthalten ist/sind.

15. Expandierbare Polymerisate nach einem der Ansprüche 13 oder 14, **dadurch gekennzeichnet, dass** gelber Cyclooctaschwefel (S₈), insbesondere in einer Menge von 0,1 bis 10 Gew%, insbesondere in einer Menge von etwa 0,5 bis 5 Gew%, vorzugsweise etwa 2 Gew%, bezogen auf das Gesamtgewicht des Polymers enthalten ist, und/oder
dass die schwefelhaltigen Verbindungen bzw. Schwefelverbindungen bei einer Analyse mittels Thermogravimetrie unterhalb von 115°C eine Gewichtsabnahme von weniger als 10 Gew.-% aufweisen,
und/oder
dass die schwefelhaltige Verbindung bzw. Schwefelverbindung zumindest eine S-S-Bindung aufweist, wobei zumindest eines der Schwefelatome in zweiwertiger Form vorliegt, z.B. Cystin, Amylphenoldisulfid und/oder Poly-tert-butylphenoldisulfid.

16. Expandierbare Polymerisate nach einem der Ansprüche 13 bis 15, **dadurch gekennzeichnet, dass** die expandierbaren Polymerisate aus Homo- und Copolymeren von Styrol, vorzugsweise glasklares Polystyrol (GPPS), Schlagzähpolystyrol (HIPS), anionisch polymerisiertes Polystyrol oder Schlagzähpolystyrol (A-IPS), Styrol-alpha-Methylstyrol-copolymere, Acrylnitril-Butadien-Styrolpolymerisate (ABS), Styrol-Acrylnitril (SAN) Acrylnitril-Styrol-Acrylester (ASA), Methyacrylat-Butadien-Styrol (MBS), Methylmethacrylat-Acrylnitril-Butadien-Styrol (MABS)-polymerisate oder Mischungen davon oder mit Polyphenylenether (PPE) bestehen.

17. Verfahren zur Herstellung von flammgeschützten, expandierbaren *Styrolpolymerisaten* gemäß einem der Ansprüche 13 bis 16, **dadurch gekennzeichnet, dass** als Flammschutzmittel zumindest eine Phosphorverbindung der allgemeinen Formel (I) gemäß einem der Ansprüche 13 oder 14, bzw. ringgeöffnete Hydrolysate oder Salze davon, eingesetzt wird, sowie als zusätzliches Flammschutzmittel bzw. -synergist Schwefel und/oder zumindest eine schwefelhältige Verbindung bzw. Schwefelverbindung gemäß einem der Ansprüche 1, 3, 13 und/oder 15.

18. Verfahren zur Herstellung von flammgeschützten expandierbaren Styrolpolymerisaten (EPS) nach Anspruch 17,
- wobei die Phosphorverbindung, der Schwefel bzw. die Schwefelverbindung und ein Treibmittel mit einer Styrolpolymerschmelze mit Hilfe eines dynamischen bzw. statischen Mischers gemischt und anschließend granuliert werden
oder
- wobei die Phosphorverbindung und der Schwefel bzw. die Schwefelverbindung, mittels eines dynamischen bzw. statischen Mischers zu noch granulatförmigem Polystyrolpolymerisat zugemischt und aufgeschmolzen werden, und die Schmelze anschließend mit Treibmittel versetzt und granuliert wird
oder
- wobei die Phosphorverbindung und der Schwefel bzw. die Schwefelverbindung mittels eines dynamischen bzw. statischen Mischers zu noch granulatförmigem EPS oder zugemischt werden, und die Mischung anschließend aufgeschmolzen und granuliert wird
oder
- wobei die Granulatherstellung durch Suspensions-Polymerisation von Styrol in wässriger Suspension in Gegenwart der Phosphorverbindung, des Schwefels bzw. der Schwefelverbindung und eines Treibmittels erfolgt.

19. Verfahren zur Herstellung von flammgeschützten expandierbaren Styrolpolymerisaten (EPS) nach Anspruch 17 oder 18 umfassend die Schritte:
- Gemeinsames Dosieren in einen Extruder von PS- oder EPS-Granulat mit einem Molekulargewicht von Mw > 120 000 g/mol, bevorzugt von 150 000 bis 250 000 g/mol, besonders bevorzugt von 180 000 bis 220 000 g/mol, sowie von der Phosphorverbindung, dem Schwefel bzw. der Schwefelverbindung und gegebenenfalls von einem oder mehreren weiteren Additiven, insbesondere
f) Flammschutzsynergisten, z.B. thermische Radikalbildner, wie Dicumylperoxid, in einer Konzentration von 0,1 bis 20 Gew%,
g) Infrarottrübungsmittel, z.B. Graphit, Ruß, Aluminium, Titandioxid, in einer Konzentration von 0,1 bis 1 Gew%,
h) Stabilisatoren, z.B. Nitroxyl-Radikal bildende Substanzen, wie HTEMPO, in einer Konzentration von 0,1 bis 1 Gew%,
i) weitere halogenierte oder halogenfreie Flammschutzmittel, z.B. HBCD, DOP-O, Magnesiumhydroxid, in einer Konzentration von 0,1 bis 20 Gew% und/oder
j) Füllstoffe, z.B. Kreide, Talkum, Silikate, in einer Konzentration von 1 bis 20 Gew%
- Gemeinsame Aufschmelzung aller Komponenten im Extruder,
- Optionale Zudosierung zumindest eines Treibmittels,
- Mischung aller Komponenten bei einer Temperatur > 120°C,
- Granulierung mittels druckbeaufschlagter Unterwassergranulierung, bei z.B. 1-20 bar, zu einer Granulatgröße < 5 mm, bevorzugt 0,2 bis 2,5 mm, bei einer Wassertemperatur von 30 bis 100 ° C, insbesondere 50 bis 80° C,
- gegebenenfalls oberflächliche Beschichtung mit Coatingmitteln, z.B. Silikate, Metallsalze von Fettsäuren, Fettsäureester, Fettsäureamide.

20. Flammgeschützte, expandierbare Styrolpolymerisate (EPS) erhältlich nach einem Verfahren gemäß einem der Ansprüche 17 bis 19.

21. *Styrol*polymerschaumstoff, insbesondere Styrolpolymer-Partikelschaumstoff oder extrudierter Polystyrol-Hartschaum (XPS), enthaltend als Flammschutzmittel zumindest eine Phosphorverbindung der allgemeinen Formel (I) gemäß einem der Ansprüche 13 oder 14, bzw. Hydrolysate oder Salze davon, sowie als zusätzliches Flammschutzmittel bzw. -synergist Schwefel und/oder zumindest eine schwefelhaltige Verbindung bzw. Schwefelverbindung gemäß einem der Ansprüche 1, 3, 13 und/oder 15.

22. *Styrol*polymerschaumstoff nach Anspruch 21 erhältlich aus flammgeschützten expandierbaren Polymerisaten gemäß einem der Ansprüche 13 bis 16, insbesondere aus expandierbaren Styrolpolymerisaten (EPS), insbesondere durch Aufschäumen und Versintern der Polymerisate oder durch Extrusion.

23. *Styrol*polymerschaumstoff nach Anspruch 21 oder 22 mit einer Dichte zwischen 7 und 200 g/l und/oder einer überwiegend geschlossenzelligen Zellstruktur mit mehr als 0,5 Zellen pro mm³ bzw. einer Struktur bei der mehr als 80% der Zellen geschlossenzellig sind.

24. Verwendung von zumindest einer Phosphorverbindung der allgemeinen Formel (I) gemäß einem der Ansprüche 13 oder 14, bzw. von Hydrolysaten oder Salzen davon, in Kombination mit Schwefel und/oder einer schwefelhältigen Verbindung bzw. Schwefelverbindung gemäß einem der Ansprüche 1, 3, 13 und/oder 15 als Flammschutzmittel bzw. -synergisten
- in expandierbaren Styrolpolymerisaten (EPS) bzw. expandierbaren Styrolpolymer Granulaten (EPS) gemäß Anspruch 16,
oder
- in *Styrol*polymerschaumstoffen, insbesondere in Styrolpolymer-Partikelschaumstoffen, erhältlich durch Aufschäumen aus expandierbaren Polymerisaten, oder in extrudierten Polystyrol-Hartschäumen (XPS).

## Claims

1. A flame-retardant, preferably halogen-free flame-retardant, expandable styrene polymerizates (EPS) or expanded styrene polymer granules (EPS) containing at least one blowing agent, in which the flame retardant system is a combination of at least one phosphorus compound as a flame retardant and at least one sulfur compound, sulfur-containing compound and/or sulfur as a additional flame retardant or synergist,
**characterized in that**
a) the phosphorus compound is
- elemental phosphorus, particularly red phosphorus, and/or
- at least one inorganic phosphorus compound or a hydrolyzate or salt thereof, and/or
- at least one organic phosphorus compound of the following general formula (I) or (II) or a hydrolyzate or salt thereof 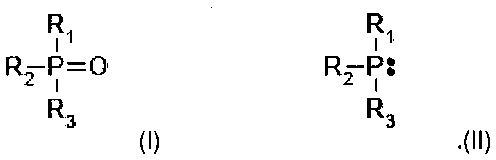 wherein each of the residues R₁, R₂ and R₃ independently is an organic or inorganic residue,
and that
b) the sulfur compound is
- elemental sulfur and/or
- at least one inorganic or organic sulfur compound or sulfur-containing compound.

2. The expandable polymer according to claim 1, **characterized in that** the phosphorus compound(s) is/are contained in an amount of 0.5 to 25 wt%, in particular 3 to 15 wt%, based on the total weight of the polymer,
and/or
that the phosphorus compound(s) has/have a weight loss of less than 10 wt% in a thermogravimetric (TGA) analysis below 115 °C.

3. Expandable polymers according to any one of the preceding claims, **characterized in that** the sulfur compound(s) is/are contained in an amount of 0.5 to 25 wt%, in particular 3 to 15 wt%, based ob the total weight of the polymer,
and/or
that the sulfur compound(s) has/have a weight loss of less than 10 wt% in a thermogravimetric (TGA) analysis below 115 °C,
and/or
that the sulfur compound(s) has/have at least one S-S bond, wherein at least one of the sulfur atoms is present in the divalent form, e.g. cystine, amylphenol disulfide and/or poly-tert-butylphenol disulfide.

4. Expandable polymers according to any one of the preceding claims, **characterized in that** the expandable polymerizates consist of homo- and copolymers of styrene, preferably crystal-clear polystyrene (GPPS), high-impact polystyrene (HIPS), anionically polymerized polystyrene or high-impact polystyrene (A-IPS), styrene alpha-methylstyrene copolymers, acrylonitrile butadiene styrene polymers (ABS), styrene acrylonitrile (SAN), acrylonitrile styrene acrylic ester (ASA), methyl acrylate butadiene styrene (MBS), methyl methacrylate acrylonitrile butadiene styrene (MABS) polymers or mixtures thereof or with polyphenylene ether (PPE) or polyphenylene sulfide (PPS).

5. A method for producing flame-retardant expandable styrene polymerizates according to any one of the claims 1 to 4, **characterized in that**, as a flame-retardant, at least one phosphorus compound according to any one of the preceding claims and as an additional flame retardant or synergist a sulfur compound according to any one of the preceding claims are used.

6. The method for producing flame-retardant expandable styrene polymerizates (EPS) according to claim 5,
- wherein the phosphorus compound(s) and the sulfur compound(s) and a blowing agent are mixed with a styrene polymer melt in a dynamic or static mixer and subsequently granulated,
or
- wherein the phosphorus compound(s) and the sulfur compound(s) are added to a still granular polystyrene polymer by means of a dynamic or static mixer and the melt is subsequently treated with a blowing agent and granulated,
or
- wherein the phosphorus compound(s) and the sulfur compound(s) are added to a still granular EPS by means of a dynamic or static mixer and the mixture is subsequently molten and granulated,
or
- wherein the granule production takes place via suspension polymerization of styrene in an aqueous suspension in the presence of the phosphorus compound(s) and the sulfur compound(s) as well as a blowing agent.

7. The method for producing flame-retardant expandable styrene polymers (EPS) according to claim 5 or 6, comprising the following steps:
- collective dosing into an extruder of PS or EPS granules having a molecular weight of Mw > 120,000 g/mol, preferably 150,000 to 250,000 g/mol, most preferably 180,000 to 220,000 g/mol, as well as of the phosphorus compound(s), the sulfur compound(s) and optionally one or more further additives, particularly
a) flame-retardant synergists, e.g. thermal radical formers, such as dicumyl peroxide, in a concentration of 0.1 to 20 wt%,
b) infrared opacifiers, e.g. graphite, carbon black, aluminum, titanium dioxide, in a concentration of 0.1 to 1 wt%,
c) stabilizers, e.g. nitroxyl radicals forming substances such as HTEMPO, in a concentration of 0.1 to 1 wt%,
d) further halogenated or halogen-free flame retardants, e.g. HBCD, DOP-O, magnesium hydroxide, in a concentration of 0.1 to 20 wt%, and/or
e) fillers, e.g. chalk, talcum, silicates, in a concentration of 1 to 20 wt%,
- collective melting of all components in an extruder,
- optional addition of at least one blowing agent,
- mixing of all components at a temperature > 120 °C,
- granulating by means of pressurized underwater granulation, at e.g. 1-20 bar, to obtain a granule size of < 5 mm, preferably 0.2 to 2.5 mm, at a water temperature of 30 to 100 °C, particularly 50 to 80 °C,
- optionally superficial covering with coating agents, e.g. silicates, metal salts of fatty acids, fatty acid esters, fatty acid amides.

8. Flame-retardant expandable styrene polymerizates (EPS), obtainable by the method according to any one of the claims 5 to 7.

9. A styrene polymer foam, particularly a styrene polymer particle foam or extruded polystyrene rigid foam (XPS), containing at least one phosphorus compound according to any one of the claims 1 or 2 as a flame retardant as well as a sulfur compound according to any one of the claims 1 to 3 as an additional flame retardant or synergist.

10. The styrene polymer foam according to claim 9, obtainable from flame-retardant expandable polymerizates according to any one of the claims 1 to 4, particularly by foaming and caking the polymerizates or by extruding.

11. The styrene polymer foam according to claim 9 or 10, having a density between 7 and 200 g/l and/or a predominantly closed-cell structure with more than 0.5 cells per mm³ or a structure where more than 80% of the cells are closed cells.

12. Use of at least one phosphorus compound as a flame retardant according to any one of the claims 1 or 2 in combination with at least one sulfur compound as an additional flame retardant or synergist according to any one of the claims 1 or 3
- in expandable styrene polymerizates (EPS) or expandable styrene polymer granules (EPS) according to any one of the claims 1 to 4,
or
- in styrene polymer foams, in particular in styrene polymer particle foams, obtainable by foaming from expandable polymerizates, or in extruded polystyrene rigid foams (XPS).

13. Flame-retardant expandable styrene polymerizates (EPS) or expandable styrene polymer granules containing at least one blowing agent, in which the flame retardant is at least one phosphorus compound of the following general formula (I) or a hydrolyzate or salt thereof: 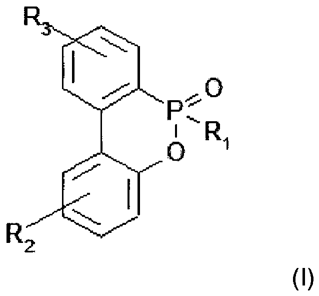 wherein each residue R independently is:
- H, substituted or unsubstituted C₁-C₁₅ alkyl, C₁-C₁₅ alkenyl, C₃-C₈ cycloalkyl, C₆-C₁₈ aryl, C₇-C₃₀ alkylaryl, C₁-C₈ alkoxy or C₁-C₈ alkylthio, or -OH or -SH as well as alkali metal, alkaline earth metal, ammonium or phosphonium salts thereof, **characterized in that** sulfur and/or at least one sulfur-containing compound or sulfur compound is used as an additional flame retardant or synergist.

14. The expandable polymerizates according to claim 13, **characterized in that** the residues R are alkyl, alkoxy or alkylthio groups having 1 to 4 carbon atoms, more preferably 1 or 2 carbon atoms,
and/or
the residues R comprise a substituent containing sulfur or phosphorus,
and/or
as phosphorus compound, 9,10-dihydro-9-oxa-10-phosphaphenanthrene-10-oxide (DOPO), 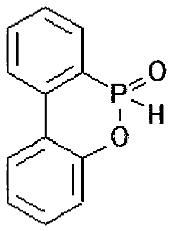 or its hydrolysis product or metal salt is contained,
and/or
the phosphorus compound(s) is/are contained as (a) flame retardant(s) in an amount of 0.5 to 25 wt%, particularly 3 to 15 wt%, based on the total weight of the polymer.

15. The expandable polymers according to any one of the claims 13 or 14, **characterized in that** yellow cyclooctasulfur (S₈) is contained, particularly in an amount of 0.1 to 10 wt%, particularly in an amount of approximately 0.5 to 5 wt%, preferably approximately 2 wt%, based on the total weight of the polymer,
and/or
the sulfur-containing compound or sulfur compound have a weight loss of less than 10 wt% in a thermogravimetric (TGA) analysis below 115 °C,
and/or
the sulfur-containing compound or sulfur compound comprise at least one S-S bond, wherein at least one of the sulfur atoms is present in the divalent form, e.g. cystine, amylphenol disulfide and/or poly-tert-butylphenol disulfide.

16. The expandable polymerizates according to any one of the claims 13 to 15, **characterized in that** the expandable polymerizates consist of homo- and copolymers of styrene, preferably crystal-clear polystyrene (GPPS), high-impact polystyrene (HIPS), anionically polymerized polystyrene or high-impact polystyrene (A-IPS), styrene alpha-methylstyrene copolymers, acrylonitrile butadiene styrene polymers (ABS), styrene acrylonitrile (SAN), acrylonitrile styrene acrylic ester (ASA), methyl acrylate butadiene styrene (MBS), methyl methacrylate acrylonitrile butadiene styrene (MABS) polymers or mixtures thereof or with polyphenylene ether (PPE).

17. The method for producing flame-retardant expandable styrene polymers according to any one of the claims 13 to 16, **characterized in that** at least one phosphorus compound of the general formula (I) according to any one of the claims 13 or 14 or a ring-opened hydrolyzate or salt thereof is used as a flame retardant and sulfur and/or at least one sulfur-containing compound or sulfur compound according to any one of the claims 1, 3, 13 and/or 15 is used as an additional flame retardant or synergist.

18. The method for producing flame-retardant expandable styrene polymers (EPS) according to claim 17,
- wherein the phosphorus compound, the sulfur or the sulfur compound and a blowing agent are mixed with a styrene polymer melt in a dynamic or static mixer and subsequently granulated,
or
- wherein the phosphorus compound and the sulfur or sulfur compound are added to a still granular polystyrene polymer by means of a dynamic or static mixer and the melt is subsequently treated with a blowing agent and granulated,
or
- wherein the phosphorus compound and the sulfur or sulfur compound are added to a still granular EPS by means of a dynamic or static mixer and the mixture is subsequently molten and granulated,
or
- wherein the granule production takes place via suspension polymerization of styrene in an aqueous suspension in the presence of the phosphorus compound, the sulfur or the sulfur compound as well as a blowing agent.

19. The method for producing flame-retardant expandable styrene polymers (EPS) according to claim 17 or 18, comprising the following steps:
- collective dosing into an extruder of PS or EPS granules having a molecular weight of Mw > 120,000 g/mol, preferably 150,000 to 250,000 g/mol, most preferably 180,000 to 220,000 g/mol, as well as of the phosphorus compound(s), the sulfur compound(s) and optionally one or more further additives, particularly
f) flame-retardant synergists, e.g. thermal radical formers such as dicumyl peroxide, in a concentration of 0.1 to 20 wt%,
g) infrared opacifiers, e.g. graphite, carbon black, aluminum, titanium dioxide, in a concentration of 0.1 to 1 wt%,
h) stabilizers, e.g. nitroxyl radicals forming substances such as HTEMPO, in a concentration of 0.1 to 1 wt%,
i) further halogenated or halogen-free flame retardants, e.g. HBCD, DOP-O, magnesium hydroxide, in a concentration of 0.1 to 20 wt%, and/or
j) fillers, e.g. chalk, talcum, silicates, in a concentration of 1 to 20 wt%,
- collective melting of all components in an extruder,
- optional addition of at least one blowing agent,
- mixing of all components at a temperature > 120 °C,
- granulating by means of pressurized underwater granulation, at e.g. 1-20 bar, to obtain a granule size of < 5 mm, preferably 0.2 to 2.5 mm, at a water temperature of 30 to 100 °C, particularly 50 to 80 °C,
- optionally superficial covering with coating agents, e.g. silicates, metal salts of fatty acids, fatty acid esters, fatty acid amides.

20. Flame-retardant expandable styrene polymers (EPS) obtainable according to the method according to any one of the claims 17 to 19.

21. A styrene polymer foam, particularly a styrene polymer particle foam or extruded polystyrene rigid foam (XPS), containing at least one phosphorus compound of the general formula (I) according to any one of the claims 13 or 14 or hydrolyzates or salts thereof as a flame retardant as well as sulfur and/or at least one sulfur-containing compound or sulfur compound according to any one of the claims 1, 3, 13 and/or 15 as an additional flame retardant or synergist.

22. The styrene polymer foam according to claim 21 obtainable from flame-retardant expandable polymerizates according to any one of the claims 13 to 16, particularly form expandable styrene polymerizates (EPS), particularly by foaming and caking the polymers or by extruding.

23. The styrene polymer foam according to claim 21 or 22 having a density between 7 and 200 g/l and/or a predominantly closed-cell structure with more than 0.5 cells per mm³ or a structure where more than 80% of the cells are closed cells.

24. Use of at least one phosphorus compound of the general formula (I) according to any one of the claims 13 or 14 or of hydrolyzates or salts thereof in combination with sulfur and/or a sulfur-containing compound or sulfur compound according to any one of the claims 1, 3, 13 and/or 15 as flame retardants or synergists
- in expandable styrene polymerizates (EPS) or expandable styrene polymer granules (EPS) according to claim 16,
or
- in styrene polymer foams, particularly in styrene polymer particle foams, obtainable by foaming from expandable polymerizates, or in extruded polystyrene rigid foams (XPS).

## Revendications

1. Polymères de styrène (EPS) ou granulés de polymères de styrène (EPS) expansibles retardateurs, de préférence retardateurs sans halogènes, contenant au moins un agent moussant, qui contiennent comme système retardateur une combinaison d'au moins un composé du phosphore comme agent retardateur et d'au moins un composé du soufre, un composé contenant du soufre et/ou du soufre comme agent ou synergiste retardateur supplémentaire, **caractérisés en ce que**
a) ledit composé du phosphore est
- du phosphore élémentaire, notamment du phosphore rouge, et/ou
- au moins un composé anorganique du phosphore ou un hydrolysat ou sel dudit composé et/ou
- au moins un composé organique du phosphore d'une des formules générales (I) et (II) ci-dessous ou un hydrolysat ou sel dudit composé : 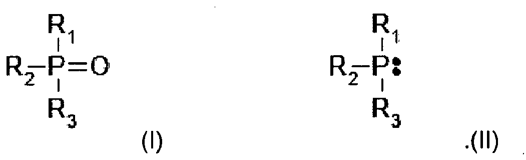 dans lesquelles chacun des radicaux R₁, R₂ et R₃ est indépendamment un radical organique ou anorganique,
et **en ce que**
b) ledit composé du soufre est
- du soufre élémentaire et/ou
- au moins un composé anorganique ou organique du soufre ou un composé anorganique ou organique contenant du soufre.

2. Polymères expansibles selon la revendication 1, **caractérisés en ce qu'**ils contiennent une quantité de 0,5 à 25 % en poids, notamment de 3 à 15 % en poids, dudit/desdits composé/s du phosphore par rapport au poids total du polymère et/ou que ledit/lesdits composé/s du phosphore perdent moins de 10 % en poids de leur poids lors d'une analyse par thermogravimetrie à une température de moins de 115 °C.

3. Polymères expansibles selon une des revendications précédentes, **caractérisés en ce qu'**ils contiennent une quantité de 0,5 à 25 % en poids, notamment de 3 à 15 % en poids, dudit/desdits composé/s du soufre par rapport au poids total du polymère
ou
qu'ils contiennent une quantité de 0,1 à 10 % en poids, notamment de 0,5 à 5 % en poids, de préférence environ 2 % en poids, du cyclooctasoufre (S₈) jaune par rapport au poids total du polymère
et/ou
que ledit/lesdits composé/s du soufre perdent moins de 10 % en poids de leur poids lors d'une analyse par thermogravimetrie à une température de moins de 115 °C et/ou
que ledit/lesdits composé/s du soufre ont au moins une liaison S-S, au moins un des atomes de soufre étant divalent, comme par exemple la cystine, le disulfure du phénole amylique et/ou le disulfure du polyphénole tert-butylique.

4. Polymères expansibles selon une des revendications précédentes, **caractérisés en ce qu'**ils consistent en des homo- et copolymères de styrène, de préférence en polystyrène cristal (GPPS), polystyrène résistant aux chocs (HIPS), polystyrène obtenu par polymérisation anionique (A-IPS), des copolymères de styrène et d'alpha-méthylstyrène, des polymères d'acrylonitrile-styrène-butadiène (ABS), styrène-acrylonitrile (SAN), ester d'acrylonitrile-styrène (ASA), méthylacrylate de styrène-butadiène (MBS), des polymères de méthacrylate-acrylonitrile-styrène-butadiène (MABS) ou des mélanges des styrènes précités ou avec l'éther de polyphénylène (PPE).

5. Procédé pour la production de polymères expansibles retardateurs selon une des revendications 1 à 4, **caractérisé en ce que** ledit procédé utilise au moins un composé du phosphore selon une des revendications précédentes comme agent retardateur et au moins un composé du soufre selon une des revendications précédentes comme agent ou synergiste retardateur supplémentaire.

6. Procédé pour la production de polymères de styrène (EPS) expansibles retardateurs selon la revendication 5,
- le/s composé/s du phosphore et le/s composé/s du soufre et un agent moussant étant mélangés avec un polymère de styrène fondé en utilisant un mélangeur dynamique ou statique et puis granulés
ou
- le/s composé/s du phosphore et le/s composé/s du soufre étant mélangés avec un polymère de polystyrène granulé avec un mélangeur dynamique ou statique et puis portés à fusion, la matière en fusion étant ensuite imprégnée d'un agent moussant et granulée,
ou
- le/s composé/s du phosphore et le/s composé/s du soufre étant mélangés avec de l'EPS granulé avec un mélangeur dynamique ou statique, le mélange étant ensuite porté à fusion et granulé,
ou
- le granulé est produit par une polymérisation en suspension de styrène dans une suspension aqueuse en présence du/des composé/s du phosphore et du/des composé/s du soufre et d'un agent moussant.

7. Procédé pour la production de polymères de styrène (EPS) expansibles retardateurs selon la revendication 5 ou 6, comprenant les étapes suivantes:
- doser ensemble dans une extrudeuse du granulé PS ou EPS d'un poids moléculaire Mw de > 120.000 g/mol, de préférence de 150.000 à 250.000 g/mol, notamment de 180.000 à 220.000 g/mol, et du/des composé/s du phosphore et du/des composé/s du soufre et, selon le cas, d'un ou plusieurs additifs additionnels, notamment
a) des synergistes retardateurs, comme des formateurs thermiques de radicaux, comme du peroxyde de dicumyle, par exemple, en une concentration de 0,1 à 20 % en poids,
b) des agents opacifiant le rayonnement infrarouge, comme du graphite, du noir, de l'aluminium, du dioxyde de titane, par exemple, en une concentration de 0,1 à 1 % en poids,
c) des stabilisateurs, comme des substances formant des radicaux nitroxyle, comme le HTEMPO, par exemple, en une concentration de 0,1 à 1 % en poids,
d) d'autres retardateurs halogénés ou sans halogènes, comme le HBCD, DOP-O, l'hydroxyde de magnésium, par exemple, en une concentration de 0,1 à 20 % en poids, et/ou
e) des matières de remplissage, comme de la craie, de la poudre de talc, des silicates, par exemple, en une concentration de 1 à 20 % en poids;
- porter à fusion tous composants ensemble dans l'extrudeuse;
- ajouter une dosée facultative d'au moins un agent moussant;
- mélanger tous composants à une température de > 120 °C;
- granuler par granulation submergée pressurisée, à 1 à 20 bar, par exemple, pour obtenir une grosseur des granulés de < 5 mm, notamment de 0,2 à 2,5 mm, à une température d'eau de 30 à 100 °C, notamment de 50 à80 °C;
- selon le cas, recouvrir la surface d'une couche d'agents d'enduction, comme, par exemple, des silicates, des sels métalliques d'acides gras, d'esters d'acides gras, d'amides d'acides gras.

8. Polymères de styrène (EPS) expansibles retardateurs, qu'on peut obtenir par un procédé selon une des revendications 5 à 7.

9. Mousse polymère, notamment mousse particulaire d'un polymère de styrène ou mousse solidifiée extrudée de polystyrène (XPS), comprenant au moins un composé du phosphore selon une des revendications 1 à 2 comme retardateur et au moins un composé du soufre selon une des revendications 1 à 3 comme agent ou synergiste retardateur supplémentaire.

10. Mousse polymère selon la revendication 9, qu'on peut obtenir des polymères retardateurs expansibles selon une des revendications 1 à 4, notamment par moussage et frittage desdits polymères ou par extrusion.

11. Mousse polymère selon la revendication 9 ou 10, d'une densité d'entre 7 et 200 g/l et/ou avec des alvéoles majoritairement fermées avec plus de 0,5 alvéoles par mm³ et une structure dans laquelle plus de 80 % des alvéoles sont fermées.

12. Utilisation d'au moins un composé du phosphore selon la revendication 1 ou 2 comme retardateur, en combinaison avec au moins un composé du soufre selon une des revendications 1 ou 3 comme agent ou synergiste retardateur supplémentaire
- dans des polymères de styrène expansibles (EPS) ou des polymères de styrène granulés expansibles (EPS) selon une des revendications 1 à 4
ou
- dans des mousses polymères, notamment des mousses particulaires de polymères de styrène, qu'on peut obtenir en moussant des polymères expansibles, ou dans des mousses solidifiées extrudées de polystyrène (XPS).

13. Polymères de styrène (EPS) ou granulés de polymères de styrène (EPS) expansibles retardateurs, contenant au moins un agent moussant, qui contiennent comme retardateur au moins un composé du phosphore de la formule générale (I) ci-dessous ou des hydrolysats ou sels dudit composé : 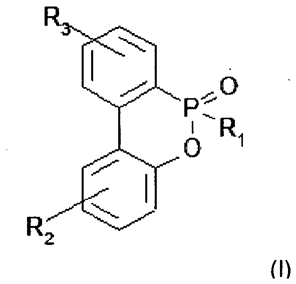 dans laquelle chacun des radicaux R est indépendamment:
- H, alkyle en C₁₋₁₅ substitué ou non-substitué, alcényle en C₁₋₁₅, cycloalkyle en C₃₋₈, aryle en C₆₋₁₈, alkylaryle en C₇₋₃₀, alcoxyle en C₁₋₈ ou alkylthio en C₁₋₈ ou -OH ou -SH ou des sels de métal alcalin, de métal alcalinoterreux, d'ammonium ou de phosphonium desdits composés, **caractérisés en ce qu'**ils contiennent du soufre et/ou au moins un composé contenant du soufre ou un composé du soufre comme agent ou synergiste retardateur supplémentaire.

14. Polymères expansible selon la revendication 13, **caractérisé en ce que** les radicaux R sont des groupes alkyle, alcoxyle ou alkylthio de 1 à 4 atomes de carbone, de préférence de 1 à 2 atomes de carbone,
et/ou
que les radicaux R ont un substituent contenant du soufre ou du phosphore,
et/ou
qu'ils contiennten du 9,10-dihydro-9-oxa-10-phosphaphénanthrén-10-oxyde (DOPO) 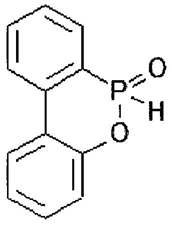 son hydrolysat ou sel métallique comme composé du phosphore,
et/ou
qu'ils contiennent comme retardateur une quantité de 0,5 à 25 % en poids, notamment de 3 à 15 % en poids, dudit/desdits composé/s du phosphore par rapport au poids total du polymère.

15. Polymères expansibles selon la revendication 13 ou 14, **caractérisés en ce qu'**ils contiennent du cyclooctasoufre (S₈) jaune, notamment à une quantité de 0,1 à 10 % en poids, notamment à une quantité de 0,5 à 5 % en poids, de préférence environ 2 % en poids, par rapport au poids total du polymère
et/ou
que lesdits composés contenant du soufre ou lesdits composés du soufre perdent moins de 10 % en poids de leur poids lors d'une analyse par thermogravimetrie à une température de moins de 115 °C
et/ou
que ledit composé contenant du soufre ou ledit composé du soufre a au moins une liaison S-S, au moins un des atomes de soufre étant divalent, comme par exemple la cystine, le disulfure du phénole amylique et/ou le disulfure du polyphénole tert-butylique.

16. Polymères expansibles selon une des revendications 13 à 15, **caractérisés en ce qu'**ils consistent en des homo- et copolymères de styrène, de préférence en polystyrène cristal (GPPS), polystyrène résistant aux chocs (HIPS), polystyrène obtenu par polymérisation anionique (A-IPS), des copolymères de styrène et d'alpha-méthylstyrène, des polymères d'acrylonitrile-styrène-butadiène (ABS), styrène-acrylonitrile (SAN), ester d'acrylonitrile-styrène (ASA), méthylacrylate de styrène-butadiène (MBS), des polymères de méthacrylate-acrylonitrile-styrène-butadiène (MABS) ou des mélanges des styrènes précités ou avec l'éther de polyphénylène (PPE).

17. Procédé pour la production de polymères expansibles retardateurs selon une des revendications 13 à 16, **caractérisé en ce que** ledit procédé utilise au moins un composé du phosphore de la formule générale (I) selon une des revendications 13 et 14 ou des hydrolysats à cycle ouvert ou des sels dudit composé comme agent retardateur et du soufre et/ou au moins un composé contenant du soufre ou un composé du soufre selon une des revendications 1, 3, 13 et/ou 15 comme agent ou synergiste retardateur supplémentaire.

18. Procédé pour la production de polymères de styrène (EPS) expansibles retardateurs selon la revendication 17,
- le composé du phosphore, le soufre ou le composé du soufre et un agent moussant étant mélangés avec un polymère de styrène fondé en utilisant un mélangeur dynamique ou statique et puis granulés
ou
- le composé du phosphore et le soufre ou le composé du soufre étant mélangés avec un polymère de polystyrène granulé avec un mélangeur dynamique ou statique et puis portés à fusion, la matière en fusion étant ensuite imprégnée d'un agent moussant et granulée,
ou
- le composé du phosphore et le soufre ou le composé du soufre étant mélangés avec de l'EPS granulé avec un mélangeur dynamique ou statique, le mélange étant ensuite porté à fusion et granulé,
ou
- le granulé est produit par une polymérisation en suspension de styrène dans une suspension aqueuse en présence du composé du phosphore et du soufre ou du composé du soufre et d'un agent moussant.

19. Procédé pour la production de polymères de styrène (EPS) expansibles retardateurs selon la revendication 17 ou 18, comprenant les étapes suivantes:
- doser ensemble dans une extrudeuse du granulé PS ou EPS d'un poids moléculaire Mw de > 120.000 g/mol, de préférence de 150.000 à 250.000 g/mol, notamment de 180.000 à 220.000 g/mol, et du composé du phosphore, du soufre ou du composé du soufre et, selon le cas, d'un ou plusieurs additifs additionnels, notamment
a) des synergistes retardateurs, comme des formateurs thermiques de radicaux, comme du peroxyde de dicumyle, par exemple, en une concentration de 0,1 à 20 % en poids,
b) des agents opacifiant le rayonnement infrarouge, comme du graphite, du noir, de l'aluminium, du dioxyde de titane, par exemple, en une concentration de 0,1 à 1 % en poids,
c) des stabilisateurs, comme des substances formant des radicaux nitroxyle, comme le HTEMPO, par exemple, en une concentration de 0,1 à 1 % en poids,
d) d'autres retardateurs halogénés ou sans halogènes, comme le HBCD, DOP-O, l'hydroxyde de magnésium, par exemple, en une concentration de 0,1 à 20 % en poids, et/ou
e) des matières de remplissage, comme de la craie, de la poudre de talc, des silicates, par exemple, en une concentration de 1 à 20 % en poids;
- porter à fusion tous composants ensemble dans l'extrudeuse;
- ajouter une dosée facultative d'au moins un agent moussant;
- mélanger tous composants à une température de > 120 °C;
- granuler par granulation submergée pressurisée, à 1 à 20 bar, par exemple, pour obtenir une grosseur des granulés de < 5 mm, notamment de 0,2 à 2,5 mm, à une température d'eau de 30 à 100 °C, notamment de 50 à80 °C;
- selon le cas, recouvrir la surface d'une couche d'agents d'enduction, comme, par exemple, des silicates, des sels métalliques d'acides gras, d'esters d'acides gras, d'amides d'acides gras.

20. Polymères de styrène (EPS) expansibles retardateurs qu'on peut obtenir par un procédé selon une des revendications 17 à 19.

21. Mousse polymère, notamment mousse particulaire d'un polymère de styrène ou mousse solidifiée extrudée de polystyrène (XPS), comprenant au moins un composé du phosphore de la formule générale (I) selon une des revendications 13 et 14 ou des hydrolysats ou sels dudit composé comme retardateur et du soufre et/ou au moins un composé contenant du soufre ou un composé du soufre selon une des revendications 1, 3, 13 et/ou 15 comme agent ou synergiste retardateur supplémentaire.

22. Mousse polymère selon la revendication 21, qu'on peut obtenir des polymères retardateurs expansibles selon une des revendications 13 à 16, notamment des polymères de styrène expansibles (EPS), notamment par moussage et frittage desdits polymères ou par extrusion.

23. Mousse polymère selon la revendication 21 ou 22, d'une densité d'entre 7 et 200 g/l et/ou avec des alvéoles majoritairement fermées avec plus de 0,5 alvéoles par mm³ et une structure dans laquelle plus de 80 % des alvéoles sont fermées.

24. Utilisation d'au moins un composé du phosphore de la formule générale (I) selon une des revendications 13 et 14 ou des hydrolysats ou sels dudit composé comme retardateur, en combinaison avec du soufre et/ou un composé contenant du soufre ou un composé du soufre selon une des revendications 1, 3, 13 et/ou 15 comme agent ou synergiste retardateur supplémentaire
- dans des polymères de styrène expansibles (EPS) ou des polymères de styrène granulés expansibles (EPS) selon la revendication 16
ou
- dans des mousses polymères, notamment des mousses particulaires de polymères de styrène, qu'on peut obtenir en moussant des polymères expansibles, ou dans des mousses solidifiées extrudées de polystyrène (XPS).
